# EUROPEAN PATENT APPLICATION

(11) **EP 4 645 981 A1**
(43) Date of publication of application: **05.11.2025**
(21) Application number: 23910597.6
(22) Date of filing: 26.12.2023
(51) Int. Cl.: H04W 72/0446

(54) **METHOD AND APPARATUS FOR WIRELESS COMMUNICATIONS**

(30) Priority: 29.12.2022 CN 202211710372; 13.01.2023 CN 202310200133
(71) Applicant: SHANGHAI LANGBO COMMUNICATION TECHNOLOGY COMPANY LIMITED, Shanghai 200240 (CN)
(72) Inventor: WU, Keying, Shanghai 201206 (CN); ZHANG, Xiaobo, Shanghai 201206 (CN)
(74) Representative: Gunzelmann, Rainer
(86) International application number: PCT/CN2023/141932
(87) International publication number: WO 2024/140674

(57) **Abstract**

Disclosed in the present application are a method and apparatus for wireless communications. The method comprises: a first node receiving a first information block; determining a first resource set and a first resource set group from among M resource sets; and monitoring a first-type channel in a first time window and within the first resource set group. The first information block is used for determining a first index set; the M resource sets pairwise overlap in a time domain in the first time window, and the first resource set group comprises the first resource set; the first resource set group depends on the QCL-typeD characteristic of the first resource set; the first node determines the first resource set from among resource sets that meet a first condition; and the first condition is related to the first index set. The method improves the efficiency of downlink transmission and improves the energy efficiency on a network side.

## Description

### Technical Field

The present application relates to a transmission method and apparatus in a wireless communication system, in particular to a method and apparatus for transmitting wireless signals in a wireless communication system supporting a cellular network.

### Background Art

The multi-antenna technology is a key technology in a 3GPP (3rd Generation Partner Project) LTE (Long-Term Evolution) system and an NR (New Radio) system. Additional spatial degrees of freedom are obtained by configuring multiple antennas at communication nodes, such as base stations or UE (User Equipment). Multiple antennas, through beamforming, form beams pointing to a specific direction to improve communication quality. When multiple antennas belong to multiple TRPs (Transmitter Receiver Points)/panels (antenna panels), additional diversity/multiplexing gains can be obtained by utilizing the spatial differences between different TRPs/panels. In NR systems, beam-based transmission methods are introduced. By indicating a QCL (Quasi Co-Location) relationship for downlink signals (including Physical Downlink Control Channel, PDCCH and Physical downlink shared channel, PDSCH), the UE can adopt correct spatial reception parameters to receive the downlink signals. In the NR systems, for PDCCH candidates that overlap in a time domain, the UE only needs to monitor PDCCH candidates with the same QCL-typeD property as one or two specific CORESETs.

NR R (Release) 18 started research on network energy efficiency, which comprises some key technologies, for example, dynamically adaptation of spatial elements, such as but not limited to an active transceiver chain, an active TRP/antenna panel, and an update of CSI-RS configuration, so as to save power consumption on a network side.

### Summary of the Invention

The inventors have found through research that in systems that support the dynamically adaptation of spatial elements, the existing monitoring technology for PDCCH candidates that overlap in a time domain needs to be enhanced. In view of the above problem, the present application discloses a solution. It should be noted that, although the above description uses beam-based transmission, taking monitoring of PDCCH candidates and scenarios supporting the dynamically adaptation of spatial elements as examples, the present application is also applicable to other scenarios such as single-antenna-based transmission, scenarios not supporting the dynamically adaptation of spatial elements, and reception of other downlink signals and even signals on other links (such as but not limited to a sidelink), and achieves similar technical effects in beam-based transmission, scenarios supporting the dynamically adaptation of spatial elements, and monitoring of PDCCH candidates. In addition, the use of a unified solution for different scenarios (including, but not limited to beam-based transmission, single-antenna-based transmission, monitoring of PDCCH candidates, reception of other downlink signals, reception of signals on other links, supporting the dynamically adaptation of spatial elements and not supporting the dynamically adaptation of spatial elements) can also help to reduce hardware complexity and costs. In the absence of conflicts, embodiments and features in the embodiments in a first node of the present application can be applied to a second node, and vice versa. In the absence of conflicts, embodiments and features in the embodiments of the present application may be arbitrarily combined with each other.

As one embodiment, the interpretation of the terminologies in the present application refers to the definition of the specification protocol TS36 series of 3GPP.

As one embodiment, the interpretation of the terminologies in the present application refers to the definition of the specification protocol TS38 series of 3GPP.

As one embodiment, the interpretation of the terminologies in the present application refers to the definition of the specification protocol TS37 series of 3GPP.

As one embodiment, the interpretation of the terminologies in the present application refers to the definition of the specification protocol of IEEE (Institute of Electrical and Electronics Engineers).

The present application discloses a method used in a first node for wireless communications, characterized by comprising:
receiving a first information block, the first information block being used for determining a first index set;
determining a first resource set and a first resource set group from among M resource sets, M being a positive integer greater than 1, and the first resource set group comprising at least one of the M resource sets; and
monitoring a first-type channel in a first time window and within only the first resource set group among the M resource sets;
wherein any two of the M resource sets overlap in a time domain in the first time window, and the first resource set group comprises the first resource set; the first resource set group depends on the QCL-typeD property of the first resource set; the first node determines the first resource set from among resource sets that meet a first condition among the M resource sets; and the first condition is related to the first index set.

As one embodiment, the essence of the present application comprises: determining a monitored PDCCH candidate according to the dynamically adaptation of spatial elements.

As one embodiment, the benefits of the present application comprise: improving the efficiency of downlink transmission and avoiding the waste of user processing capacity.

As one embodiment, the benefits of the present application comprise: improving the energy efficiency on a network side.

According to one aspect of the present application, the above method is characterized in that each of the M resource sets corresponds to at least one first-type index; and the first condition comprises that the corresponding first-type index does not belong to the first index set.

According to one aspect of the present application, the above method is characterized in that each of the M resource sets corresponds to at least one first-type index; and the first condition comprises that the corresponding first-type index belongs to the first index set.

According to one aspect of the present application, the above method is characterized in that the first resource set group is related to the number of QCL-typeD properties of the first resource set.

According to one aspect of the present application, the above method is characterized by comprising:
determining a second resource set from among the M resource sets, the first resource set group comprising the second resource set;
wherein one search space set associated with the first resource set and one search space set associated with the second resource set comprise a first-type parameter set to the same value; and the first resource set group depends on the QCL-typeD property of the second resource set.

According to one aspect of the present application, the above method is characterized in that a third resource set is one of the M resource sets, and the first-type index corresponding to the third resource set comprises an identifier of an RS resource indicated by the QCL-typeD property of the third resource set.

According to one aspect of the present application, the above method is characterized in that a fourth resource set is one of the M resource sets, and the first-type index corresponding to the fourth resource set comprises an identifier of a TCI state of the fourth resource set.

According to one aspect of the present application, the above method is characterized in that a fifth resource set is one of the M resource sets, and the first-type index corresponding to the fifth resource set comprises a CORESET pool index of the fifth resource set.

According to one aspect of the present application, the above method is characterized in that the first information block is used for determining a target time slot; and the first node determines the first resource set from among resource sets that meet the first condition among the M resource sets only when the first time window is not earlier than the target time slot in the time domain.

According to one aspect of the present application, the above method is characterized in that the first node is user equipment.

According to one aspect of the present application, the above method is characterized in that the first node is a relay node.

The present application discloses a method used in a second node for wireless communications, characterized by comprising:
transmitting a first information block, the first information block being used for determining a first index set; and
transmitting or abandoning the transmission of a first-type channel in a first time window and within a first resource set group;
wherein the first resource set group comprises at least one of M resource sets, M is a positive integer greater than 1, any two of the M resource sets overlap in a time domain in the first time window, a target recipient of the first information block determines a first resource set and the first resource set group from among the M resource sets, and monitors the first-type channel within only the first resource set group among the M resource sets; the first resource set group comprises the first resource set; the first resource set group depends on the QCL-typeD property of the first resource set; the target recipient of the first information block determines the first resource set from among resource sets that meet a first condition among the M resource sets; and the first condition is related to the first index set.

According to one aspect of the present application, the above method is characterized in that each of the M resource sets corresponds to at least one first-type index; and the first condition comprises that the corresponding first-type index does not belong to the first index set.

According to one aspect of the present application, the above method is characterized in that each of the M resource sets corresponds to at least one first-type index; and the first condition comprises that the corresponding first-type index belongs to the first index set.

According to one aspect of the present application, the above method is characterized in that the first resource set group is related to the number of QCL-typeD properties of the first resource set.

According to one aspect of the present application, the above method is characterized in that the first resource set group depends on the QCL-typeD property of a second resource set; one search space set associated with the first resource set and one search space set associated with the second resource set comprise a first-type parameter set to the same value; and the target recipient of the first information block determines the second resource set from among the M resource sets, and the first resource set group comprises the second resource set.

According to one aspect of the present application, the above method is characterized in that a third resource set is one of the M resource sets, and the first-type index corresponding to the third resource set comprises an identifier of an RS resource indicated by the QCL-typeD property of the third resource set.

According to one aspect of the present application, the above method is characterized in that a fourth resource set is one of the M resource sets, and the first-type index corresponding to the fourth resource set comprises an identifier of a TCI state of the fourth resource set.

According to one aspect of the present application, the above method is characterized in that a fifth resource set is one of the M resource sets, and the first-type index corresponding to the fifth resource set comprises a CORESET pool index of the fifth resource set.

According to one aspect of the present application, the above method is characterized in that the first information block is used for determining a target time slot; and the target recipient of the first information block determines the first resource set from among resource sets that meet the first condition among the M resource sets only when the first time window is not earlier than the target time slot in the time domain.

According to one aspect of the present application, the above method is characterized in that the second node is a base station.

According to one aspect of the present application, the above method is characterized in that the second node is user equipment.

According to one aspect of the present application, the above method is characterized in that the second node is a relay node.

The present application discloses a first node device for wireless communications, characterized by comprising:
a first processor, receiving a first information block, the first information block being used for determining a first index set;
the first processor determining a first resource set and a first resource set group from among M resource sets, M being a positive integer greater than 1, and the first resource set group comprising at least one of the M resource sets; and
the first processor monitoring a first-type channel in a first time window and within only the first resource set group among the M resource sets;
wherein any two of the M resource sets overlap in a time domain in the first time window, and the first resource set group comprises the first resource set; the first resource set group depends on the QCL-typeD property of the first resource set; the first node determines the first resource set from among resource sets that meet a first condition among the M resource sets; and the first condition is related to the first index set.

The present application discloses a second node device for wireless communications, characterized by comprising:
a second processor, transmitting a first information block, the first information block being used for determining a first index set; and
the second processor transmitting or abandoning the transmission of a first-type channel in a first time window and within a first resource set group;
wherein the first resource set group comprises at least one of M resource sets, M is a positive integer greater than 1, any two of the M resource sets overlap in a time domain in the first time window, a target recipient of the first information block determines a first resource set and the first resource set group from among the M resource sets, and monitors the first-type channel within only the first resource set group among the M resource sets; the first resource set group comprises the first resource set; the first resource set group depends on the QCL-typeD property of the first resource set; the target recipient of the first information block determines the first resource set from among resource sets that meet a first condition among the M resource sets; and the first condition is related to the first index set.

As one embodiment, compared with the traditional solution, the present application has the following advantages:
the efficiency of downlink transmission is improved, the waste of processing capacity is avoided, and
the energy efficiency on a network side is improved.

### Brief Description of the Drawings

Other features, purposes and advantages of the present application will become more apparent from reading the detailed description of the non-limiting embodiments made with reference to the following drawings:
FIG. 1 shows a flowchart of a first information block, a first resource set, a first resource set group, and a first-type channel according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows transmission between a first node and a second node according to one embodiment of the present application;
FIG. 6 shows a schematic diagram of a first information block being used for determining a first index set according to one embodiment of the present application;
FIG. 7 shows a schematic diagram of a first node monitoring a first-type channel in a first time window and within a first resource set group according to one embodiment of the present application;
FIG. 8 shows a schematic diagram of a first resource set group being related to the number of QCL-typeD properties of a first resource set according to one embodiment of the present application;
FIG. 9 shows a schematic diagram of a first resource set group depending on the QCL-typeD property of a first resource set and the QCL-typeD property of a second resource set according to one embodiment of the present application;
FIG. 10 shows a schematic diagram of a first-type index corresponding to a third resource set comprising an identifier of an RS resource indicated by the QCL-typeD property of the third resource set according to one embodiment of the present application;
FIG. 11 shows a schematic diagram of a first-type index corresponding to a fourth resource set comprising an identifier of a TCI state of the fourth resource set according to one embodiment of the present application;
FIG. 12 shows a schematic diagram of a first-type index corresponding to a fifth resource set comprising a CORESET pool index of the fifth resource set according to one embodiment of the present application;
FIG. 13 shows a schematic diagram of a first node determining a first resource set from among resource sets that meet a first condition among M resource sets only when a first time window is not earlier than a target time slot in a time domain according to one embodiment of the present application;
FIG. 14 shows a structural block diagram of a processing unit used in a first node according to one embodiment of the present application; and
FIG. 15 shows a structural block diagram of a processing unit used in a second node according to one embodiment of the present application.

### Detailed Description of Embodiments

The technical solution of the present application will be further described in detail below in conjunction with the accompanying drawings. It should be noted that, in the absence of conflicts, embodiments and features in the embodiments of the present application may be arbitrarily combined with each other.

### Embodiment 1

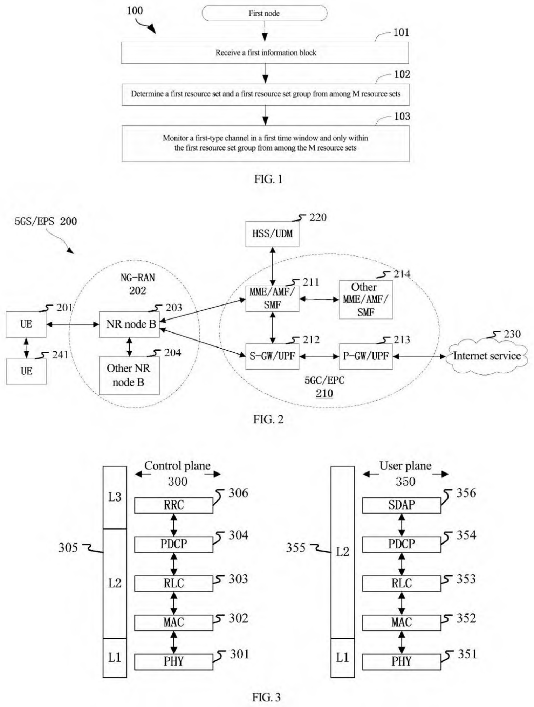

Embodiment 1 illustrates a flowchart of a first information block, a first resource set, a first resource set group, and a first-type channel according to one embodiment of the present application, as shown in FIG. 1. In 100 shown in FIG. 1, each block represents one step. In particular, the order of steps in the blocks does not represent a specific time sequence relation between the steps.

In Embodiment 1, the first node in the present application receives a first information block in step 101; determines a first resource set and a first resource set group from among M resource sets in step 102; and monitors a first-type channel in a first time window and within only the first resource set group among the M resource sets in step 103, wherein the first information block is used for determining a first index set; M is a positive integer greater than 1, and the first resource set group comprises at least one of the M resource sets; any two of the M resource sets overlap in a time domain in the first time window, and the first resource set group comprises the first resource set; the first resource set group depends on the QCL-typeD property of the first resource set; the first node determines the first resource set from among resource sets that meet a first condition among the M resource sets; and the first condition is related to the first index set.

As one embodiment, the QCL refers to: Quasi Co-Location.

As one embodiment, the first information block is carried by an RRC (Radio Resource Control) signaling.

As one embodiment, the first information block is carried by a MAC CE (Medium Access Control Layer Control Element).

As one embodiment, the first information block is carried by a physical layer signaling.

As one embodiment, the first information block is carried by DCI (Downlink Control Information).

As one embodiment, the first information block is carried jointly by a higher-layer signaling and DCI.

As one embodiment, the first information block is carried by a cell-specific signaling.

As one embodiment, the first information block is carried by a cell-specific higher-layer signaling.

As one embodiment, the first information block is carried by cell-specific DCI.

As one embodiment, the first information block is cell-specific.

As one embodiment, the first information block is carried by a UE-group common signaling.

As one embodiment, the first information block is carried by a UE-group common higher-layer signaling.

As one embodiment, the first information block is carried by UE-group common DCI.

As one embodiment, the first information block is UE-group common.

As one embodiment, the first information block is carried by a UE-specific signaling.

As one embodiment, the first information block is carried by a UE-specific higher-layer signaling.

As one embodiment, the first information block is carried by UE-specific DCI.

As one embodiment, the first information block is UE-specific.

As one embodiment, the meaning of the UE-specific comprises: UE-dedicated.

As one embodiment, the first index set comprises one or more indexes.

As one embodiment, any index in the first index set is a non-negative integer.

As one embodiment, any index in the first index set indicates one RS (Reference Signal) resource.

As one embodiment, at least one index in the first index set indicates one RS resource.

As one embodiment, any index in the first index set is used for identifying one RS resource.

As one embodiment, at least one index in the first index set is used for identifying one RS resource.

As one embodiment, any index in the first index set indicates a group of RS resources.

As one embodiment, at least one index in the first index set indicates a group of RS resources.

As one embodiment, any index in the first index set is used for identifying a group of RS resources.

As one embodiment, at least one index in the first index set is used for identifying a group of RS resources.

As one embodiment, the RS resources comprise one or more of a CSI-RS (Channel State Information-Reference Signal) resource, an SRS (Sounding Reference Signal) resource, or an SS/PBCH (Synchronisation Signal/Physical Broadcast Channel) Block resource.

As one embodiment, at least one index in the first index set is one of NZP-CSI-RS-ResourceId, SSB-Index, or SRS-ResourceId.

As one embodiment, any index in the first index set is one of NZP-CSI-RS-ResourceId, SSB-Index or SRS-ResourceId.

As one embodiment, any index in the first index set indicates one TCI (Transmission Configuration Indicator) state.

As one embodiment, at least one index in the first index set indicates one TCI state.

As one embodiment, any index in the first index set is used for identifying one TCI state.

As one embodiment, at least one index in the first index set is used for identifying one TCI state.

As one embodiment, any index in the first index set indicates a group of TCI states.

As one embodiment, at least one index in the first index set indicates a group of TCI states.

As one embodiment, at least one index in the first index set is one of a TCI-StateId or a TCI-UL-State-Id.

As one embodiment, any index in the first index set is one of a TCI-StateId or a TCI-UL-State-Id.

As one embodiment, any index in the first index set indicates one CORESET (Control REsource SET) pool.

As one embodiment, at least one index in the first index set indicates one CORESET pool.

As one embodiment, any index in the first index set is used for identifying one CORESET pool.

As one embodiment, at least one index in the first index set is used for identifying one CORESET pool.

As one embodiment, at least one index in the first index set is a coresetPoolIndex.

As one embodiment, any index in the first index set is a coresetPoolIndex.

As one embodiment, any index in the first index set indicates one CORESET.

As one embodiment, at least one index in the first index set indicates one CORESET.

As one embodiment, any index in the first index set is used for identifying one CORESET.

As one embodiment, at least one index in the first index set is used for identifying one CORESET.

As one embodiment, at least one index in the first index set is a ControlResourceSetId.

As one embodiment, any index in the first index set is a ControlResourceSetld.

As one embodiment, any index in the first index set indicates a group of CORESETs.

As one embodiment, at least one index in the first index set indicates a group of CORESETs.

As one embodiment, any index in the first index set is used for identifying a group of CORESETs.

As one embodiment, at least one index in the first index set is used for identifying a group of CORESETs.

As one embodiment, any index in the first index set indicates one antenna port.

As one embodiment, at least one index in the first index set indicates one antenna port.

As one embodiment, any index in the first index set indicates a group of antenna ports.

As one embodiment, at least one index in the first index set indicates a group of antenna ports.

As one embodiment, the antenna port comprises an RS port.

As one embodiment, the antenna port comprises at least one of a CSI-RS port or an SRS port.

As one embodiment, any index in the first index set indicates one TRP (Transmitter Receiver Point).

As one embodiment, at least one index in the first index set indicates one TRP.

As one embodiment, any index in the first index set indicates one antenna panel.

As one embodiment, at least one index in the first index set indicates one antenna panel.

As one embodiment, at least one index in the first index set indicates one cell.

As one embodiment, any index in the first index set indicates one cell.

As one embodiment, at least one index in the first index set is used for identifying one cell or TRP.

As one embodiment, any index in the first index set is used for identifying one cell or TRP.

As one embodiment, at least one index in the first index set indicates one serving cell.

As one embodiment, at least one index in the first index set indicates one PCI (Physical Cell Identifier) different from a PCI of a serving cell.

As one embodiment, at least one index in the first index set indicates one cell or TRP corresponding to a PCI different from the PCI of the serving cell.

As one embodiment, at least one index in the first index set is one cell index.

As one embodiment, any index in the first index set is one cell index.

As one embodiment, the cell index comprises one or more of a PhysCellId, a SCellIndex, or a ServCellIndex.

As one embodiment, the cell index comprises one or more of a PhysCellId, a SCellIndex, a ServCellIndex, or an AdditionalPCIIndex.

As one embodiment, in the first index set, there are two indexes that indicate one RS resource and one TCI state, respectively.

As one embodiment, in the first index set, there are two indexes that indicate one RS resource and one CORESET pool, respectively.

As one embodiment, in the first index set, there are two indexes that indicate one TCI state and one CORESET pool, respectively.

As one embodiment, the first index set is used for indicating an activated RS resource.

As one embodiment, the first index set is used for indicating an activated TCI state.

As one embodiment, the first index set is used for indicating an activated antenna port.

As one embodiment, the first index set is used for indicating an activated CORESET.

As one embodiment, the first index set is used for indicating an activated CORESET pool.

As one embodiment, the first index set is used for indicating an activated TRP or antenna panel.

As one embodiment, the first index set is used for indicating an activated cell.

As one embodiment, the first index set is used for indicating one or more of an activated RS resource, an activated TCI state, an activated antenna port, an activated CORESET, an activated CORESET pool, an activated TRP, an activated antenna panel, or an activated cell.

As one embodiment, the first index set is used for indicating a deactivated RS resource.

As one embodiment, the first index set is used for indicating a deactivated TCI state.

As one embodiment, the first index set is used for indicating a deactivated antenna port.

As one embodiment, the first index set is used for indicating a deactivated CORESET.

As one embodiment, the first index set is used for indicating a deactivated CORESET pool.

As one embodiment, the first index set is used for indicating a deactivated TRP or antenna panel.

As one embodiment, the first index set is used for indicating a deactivated cell.

As one embodiment, the first index set is used for indicating one or more of a deactivated RS resource, a deactivated TCI state, a deactivated antenna port, a deactivated CORESET, a deactivated CORESET pool, a deactivated TRP, a deactivated antenna panel, or a deactivated cell.

As one embodiment, the first index set is used for indicating a zero-power antenna port.

As one embodiment, the first index set is used for indicating a non-zero-power antenna port.

As one embodiment, the meaning of the activated comprises: non-zero-power.

As one embodiment, the meaning of the deactivated comprises: muted.

As one embodiment, the meaning of the deactivated comprises: inactive.

As one embodiment, the meaning of the deactivated comprises: zero-power.

As one embodiment, the first information block indicates the first index set.

As one embodiment, the first information block indicates each index in the first index set.

As one embodiment, the first information block explicitly indicates the first index set.

As one embodiment, the first information block implicitly indicates the first index set by indicating other information.

As one embodiment, the first information block indicates a second index set, and the second index set is used for determining the first index set; and the second index set comprises one or more indexes.

As one embodiment, any index in the second index set is a non-negative integer.

As one embodiment, any index in the second index set indicates one RS resource.

As one embodiment, at least one index in the second index set indicates one RS resource.

As one embodiment, any index in the second index set indicates a group of RS resources.

As one embodiment, at least one index in the second index set indicates a group of RS resources.

As one embodiment, any index in the second index set indicates one SS/PBCH Block resource or a group of SS/PBCH Block resources.

As one embodiment, at least one index in the second index set indicates one SS/PBCH Block resource or a group of SS/PBCH Block resources.

As one embodiment, any index in the second index set indicates one CSI-RS resource or a group of CSI-RS resources.

As one embodiment, at least one index in the second index set indicates one CSI-RS resource or a group of CSI-RS resources.

As one embodiment, any index in the second index set indicates one CRS (Cell-specific Reference Signal) resource or a group of CRS resources.

As one embodiment, at least one index in the second index set indicates one CRS resource or a group of CRS resources.

As one embodiment, any index in the second index set indicates one CRS resource or one SS/PBCH Block resource.

As one embodiment, at least one index in the second index set indicates one cell or TRP.

As one embodiment, any index in the second index set indicates one cell or TRP.

As one embodiment, at least one index in the second index set is one cell index.

As one embodiment, any index in the second index set is one cell index.

As one embodiment, the second index set is used for indicating one or more of an activated RS resource, an activated TCI state, an activated antenna port, an activated CORESET, an activated CORESET pool, an activated TRP, an activated antenna panel, or an activated cell.

As one embodiment, the second index set is used for indicating one or more of a deactivated RS resource, a deactivated TCI state, a deactivated antenna port, a deactivated CORESET, a deactivated CORESET pool, a deactivated TRP, a deactivated antenna panel, or a deactivated cell.

As one embodiment, any index in the second index set indicates one RS resource, and in the first index set, there is one index that indicates one of one TCI state, one CORESET, or one CORESET pool.

As one embodiment, any index in the second index set indicates one RS resource or one TRP, and any index in the first index set indicates one of one TCI state, one CORESET, or one CORESET pool.

As one embodiment, any index in the second index set indicates one of one SS/PBCH Block resource, one CRS resource, or one TRP, and in the first index set, there is one index that indicates one of one CSI-RS resource, one TCI state, one CORESET, or one CORESET pool.

As one embodiment, any index in the second index set indicates one of one SS/PBCH Block resource, one CRS resource, or one TRP, and any index in the first index set indicates one of one CSI-RS resource, one TCI state, one CORESET, or one CORESET pool.

As one embodiment, the first index set comprises part or all of indexes in the second index set.

As one embodiment, there is no index that belongs to both the first index set and the second index set at the same time.

As one embodiment, the second index set indicates one or more of an activated RS resource, an activated TCI state, an activated antenna port, an activated CORESET, an activated CORESET pool, an activated TRP, an activated antenna panel, or an activated cell; and the first index set indicates one or more of a deactivated RS resource, a deactivated TCI state, a deactivated antenna port, a deactivated CORESET, a deactivated CORESET pool, a deactivated TRP, a deactivated antenna panel, or a deactivated cell.

As one embodiment, the second index set indicates one or more of a deactivated RS resource, a deactivated TCI state, a deactivated antenna port, a deactivated CORESET, a deactivated CORESET pool, a deactivated TRP, a deactivated antenna panel, or a deactivated cell; and the first index set indicates one or more of an activated RS resource, an activated TCI state, an activated antenna port, an activated CORESET, an activated CORESET pool, an activated TRP, an activated antenna panel, or an activated cell.

As one embodiment, in the first time window, the first node abandons the monitoring of the first-type channel in each resource set in the M resource sets that does not belong to the first resource set group.

As one embodiment, the M is not greater than 5.

As one embodiment, the M is not greater than 3.

As one embodiment, the M is not greater than 8.

As one embodiment, the M resource sets respectively comprise M CORESETs.

As one embodiment, the M resource sets are respectively M CORESETs.

As one embodiment, the M resource sets respectively comprise M search space sets.

As one embodiment, any one of the M resource sets comprises a positive integer number of PDCCH candidates.

As one embodiment, the M resource sets respectively comprise PDCCH candidates for which M CORESETs occur in the first time window.

As one embodiment, the M resource sets are respectively composed of PDCCH candidates for which M CORESETs occur in the first time window.

As one embodiment, any one of the M resource sets occupies a positive integer number of REs (Resource Elements) greater than 1 in a time-frequency domain.

As one embodiment, one RE occupies one symbol in a time domain and one subcarrier in a frequency domain.

As one embodiment, the symbol is an OFDM (Orthogonal Frequency Division Multiplexing) symbol.

As one embodiment, the symbol is a DFT-S-OFDM (Discrete Fourier Transform Spread OFDM) symbol.

As one embodiment, the symbol is obtained after an output of transform precoding undergoes the generation of the OFDM symbol.

As one embodiment, the M resource sets are configured on the same carrier.

As one embodiment, the M resource sets are configured on the same BWP (BandWidth Part).

As one embodiment, the M resource sets are configured on the same cell.

As one embodiment, among the M resource sets, there are two resource sets that are configured on different carriers.

As one embodiment, among the M resource sets, there are two resource sets that are configured on different BWPs.

As one embodiment, among the M resource sets, there are two resource sets that are configured on different cells.

As one embodiment, among the M resource sets, there are two resource sets that are configured in active downlink BWPs of different cells.

As one embodiment, the M resource sets are respectively identified by M resource set indexes, and the M resource set indexes are respectively M non-negative integers.

As one sub-embodiment of the above embodiment, the M resource set indexes are pairwise unequal.

As one sub-embodiment of the above embodiment, resource set indexes corresponding to any two of the M resource sets that are configured in the same cell or the same BWP are not equal.

As one sub-embodiment of the above embodiment, the M resource set indexes are respectively M ControlResourceSetlds.

As one sub-embodiment of the above embodiment, the M resource set indexes are respectively M SearchSpaceIds.

As one embodiment, the first resource set group is a subset of the M resource sets.

As one embodiment, the first resource set group comprises at least one of the M resource sets other than the first resource set.

As one embodiment, the first resource set group comprises only the first resource set.

As one embodiment, any resource set in the first resource set group is one of the M resource sets.

As one embodiment, the first resource set is one of the M resource sets.

As one embodiment, indexes of cells to which the M resource sets respectively belong are used for determining the first resource set from among the M resource sets.

As one embodiment, the search space set associated with each of the M resource sets is used for determining the first resource set from among the M resource sets.

As one embodiment, whether there is a CSS (Common Search Space) set that is associated with at least one of the M resource sets is used for determining the first resource set from among the M resource sets.

As one embodiment, the determination of the first resource set depends on the indexes of the cells to which the M resource sets respectively belong.

As one embodiment, the determination of the first resource set depends on a search space set associated with each of the M resource sets.

As one embodiment, the determination of the first resource set depends on whether there is a CSS set that is associated with at least one of the M resource sets.

As one embodiment, the determination of the first resource set depends on indexes of cells to which the resource sets that meet the first condition among the M resource sets respectively belong.

As one embodiment, the determination of the first resource set depends on the search space set associated with each of the M resource sets that meets the first condition.

As one embodiment, the determination of the first resource set depends on the index and/or type of the search space set associated with each of the M resource sets that meets the first condition.

As one embodiment, the determination of the first resource set depends on whether there is a CSS set that is associated with at least one of the M resource sets that meets the first condition.

As one embodiment, if there is a CSS set that is associated with one of the M resource sets that meets the first condition, the first resource set is a resource set with which a first CSS set is associated; and The first CSS set is one CSS set having the lowest CSS set index in the cell having the lowest index, the lowest CSS set index being determined in the CSS sets with which all resource sets that meet the first condition are associated.

As one sub-embodiment of the above embodiment, the first CSS set group is composed of CSS sets with which all resource sets that meet the first condition among the M resource sets are associated, and the first cell group is composed of cells to which each CSS set in the first CSS set belongs; and the first CSS set is one CSS set having the lowest CSS set index that belongs to a first cell in the first CSS set group, the first cell being one cell having the lowest cell index in the first cell group.

As one embodiment, if each of the M resource sets that meets the first condition is not associated with the CSS set, the first resource set is a resource set with which the first USS (UE-specific Search Space) set is associated; and the first USS set is one USS set having the lowest USS set index in cells having the lowest index, the lowest USS set index being determined in all USS sets having at least one PDCCH candidate located within overlapping PDCCH monitoring occasions in the time domain and are associated with a resource set that meets the first condition.

As one sub-embodiment of the above embodiment, the first USS set group is composed of all USS sets that are associated with resource sets that meet the first condition among the M resource sets and have at least one PDCCH candidate located within overlapping PDCCH monitoring occasions in the time domain, and the second cell group is composed of cells to which each USS set in the first USS set group belongs; and the first USS set is one USS set having the lowest USS set index that belongs to a second cell in the first USS set group, the second cell being one cell having the lowest cell index in the second cell group.

As one embodiment, the first time window comprises the overlapping PDCCH monitoring occasions.

As one embodiment, the first time window is composed of the overlapping PDCCH monitoring occasions.

As one embodiment, a search space set associated with one resource set comprises: a search space set configured with the same ControlResourceSetld as a ControlResourceSetId of the one resource set.

As one embodiment, a resource set with which one search space set is associated comprises: a resource set identified by a ControlResourceSetId that is the same as a ControlResourceSetId configured for the one search space set.

As one embodiment, a search space set with which one resource set is associated comprises: a search space set that is configured with the same ControlResourceSetId as a ControlResourceSetId of the one resource set, and is configured on the same BWP with the one resource set.

As one embodiment, a resource set with which one search space set is associated comprises: a resource set that is identified by the same ControlResourceSetId as a ControlResourceSetId configured for the one search space set, and is configured on the same BWP with the one search space set.

As one embodiment, if a controlResourceSetld indicated by a ControlResourceSetld field in a SearchSpace IE configuring one search space set is equal to a ControlResourceSetId of one resource set, the one resource set is associated with the one search space set, or the one search space set is associated with the one resource set.

As one embodiment, if the controlResourceSetld indicated by the controlResourceSetld field in the SearchSpace IE configuring one search space set is equal to 0, the one search space set is associated with a resource set with the index as 0.

As one embodiment, the controlResourceSetId indicated by the controlResourceSetId field in the SearchSpace IE configuring one search space set is equal to a non-zero ControlResourceSetId of one resource set, and the one search space set and the one resource set are configured on the same BWP, the one resource set is associated with the one search space set, or the one search space set is associated with the one resource set.

As one embodiment, the M resource sets pairwise overlap in the time domain in the first time window.

As one embodiment, the first time window is one continuous time period.

As one embodiment, the first time window comprises 1 symbol or a positive integer number of symbols greater than 1.

As one embodiment, the number of symbols comprised in the first time window is not greater than 14.

As one embodiment, the first time window comprises at least 1 PDCCH monitoring occasion.

As one embodiment, the first time window comprises M PDCCH monitoring occasions, the M PDCCH monitoring occasions respectively belong to the M resource sets, and the M PDCCH monitoring occasions pairwise overlap in the time domain.

As one sub-embodiment of the above embodiment, the first time window is composed of the M PDCCH monitoring occasions.

As one embodiment, the meaning of the sentence that any two of the M resource sets overlap in a time domain in the first time window comprises: the any two resource sets comprise PDCCH candidates that overlap in the first time window.

As one embodiment, the meaning of the sentence that any two of the M resource sets overlap in a time domain in the first time window comprises: the first node is configured to monitor PDCCH candidates of the M resource sets in overlapping PDCCH monitoring occasions.

As one sub-embodiment of the above embodiment, the overlapping PDCCH monitoring occasions belong to the first time window.

As one sub-embodiment of the above embodiment, the overlapping PDCCH monitoring occasions constitute the first time window.

As one embodiment, the meaning of the sentence that any two of the M resource sets overlap in a time domain in the first time window comprises: the any two resource sets respectively comprise a first given PDCCH candidate and a second given PDCCH candidate, and the PDCCH monitoring occasion to which the first given PDCCH candidate belongs and the PDCCH monitoring occasion to which the second given PDCCH candidate belongs both belong to the first time window in the time domain and overlap in the time domain.

As one embodiment, the overlap refers to overlapping in the time domain.

As one embodiment, the first node monitors the first-type channel in a PDCCH candidate of the first resource set group that is located in the first time window.

As one embodiment, the first node monitors the first-type channel in a PDCCH monitoring occasion of the first resource set group that is located in the first time window.

As one embodiment, the QCL-typeD property of one resource set refers to: "typeD" property to which a higher-layer parameter qcl-Type is set.

As one embodiment, the QCL-typeD property of one resource set refers to: an indication of one field corresponding to the qcl-Type set to "typeD" among a qcl-Type 1 field and a qcl-Type2 field in a TCI-State IE (Information Element) corresponding to a TCI state of the one resource set.

As one embodiment, the QCL-typeD property of one resource set refers to: an RS resource indicated by one field corresponding to the qcl-Type set to "typeD" among the qcl-Type1 field and the qcl-Type2 field in the TCI-State IE corresponding to the TCI state of the one resource set.

As one embodiment, the QCL-typeD property of one resource set refers to: an RS resource corresponding to the QCL-TypeD that is indicated by the TCI state of the one resource set.

As one embodiment, the QCL-typeD property of one resource set refers to: an RS resource that is quasi co-located with a PDCCH candidate in the one resource set and corresponds to the QCL-TypeD.

As one embodiment, the QCL-typeD property of one resource set refers to: an RS resource that is quasi co-located with a DMRS (DeModulation Reference Signal) port for PDCCH reception in the one resource set and corresponds to the QCL-TypeD.

As one embodiment, the QCL-typeD property of one resource set refers to: a QCL-typeD property of an RS resource that is quasi co-located with a PDCCH candidate in the one resource set and corresponds to the QCL-TypeD.

As one embodiment, the QCL-typeD property of one resource set refers to: a QCL-typeD property of an RS resource that is quasi co-located with a DMRS port for PDCCH reception in the one resource set and corresponds to the QCL-TypeD.

As one embodiment, the QCL-typeD property of one RS resource refers to: an RS resource that is quasi co-located with the one RS resource and corresponds to the QCL-TypeD.

As one embodiment, the meaning of the sentence that the first resource set group depends on the QCL-typeD property of the first resource set comprises: whether the first resource set group comprises resource sets other than the first resource set depends on the QCL-typeD property of the first resource set.

As one embodiment, the meaning of the sentence that the first resource set group depends on the QCL-typeD property of the first resource set comprises: which resource sets among the M resource sets are comprised in the first resource set depends on the QCL-typeD property of the first resource set.

As one embodiment, the meaning of the sentence that the first resource set group depends on the QCL-typeD property of the first resource set comprises: which resource sets among the M resource sets other than the first resource set are comprised in the first resource group depends on the QCL-typeD property of the first resource set.

As one embodiment, the QCL-typeD property of the first resource set is used for determining the first resource set group.

As one embodiment, the QCL-typeD property of the first resource set is used for determining whether the first resource set group comprises resource sets other than the first resource set.

As one embodiment, the QCL-typeD property of the first resource set is used for determining which resource sets other than the first resource set are comprised in the first resource set group.

As one embodiment, any one of the M resource sets corresponds to only one of the first-type indexes.

As one embodiment, there is at least one resource set in the M resource sets that corresponds to only one of the first-type indexes.

As one embodiment, there is at least one resource set in the M resource sets that corresponds to two of the first-type indexes.

As one embodiment, there is at least one resource set in the M resource sets that corresponds to a plurality of the first-type indexes.

As one embodiment, the first-type index is a non-negative integer.

As one embodiment, the first-type index is used for identifying an RS resource.

As one embodiment, the first-type index is used for identifying a TCI state.

As one embodiment, the first-type index is used for identifying a CORESET.

As one embodiment, the first-type index is used for identifying a CORESET pool.

As one embodiment, the first-type index is used for identifying a search space set.

As one embodiment, the first-type index is used for identifying a cell or TRP.

As one embodiment, the first-type index comprises an identifier of an RS resource.

As one embodiment, the identifier of the RS resource comprises one or more of a NZP-CSI-RS-ResourceId, an SSB-Index, or an SRS-ResourceId.

As one embodiment, the first-type index comprises at least one of a NZP-CSI-RS-ResourceSetId or an SRS-ResourceSetId.

As one embodiment, the first-type index comprises at least one of a TCI-StateId or a TCI-UL-State-Id.

As one embodiment, the first-type index comprises a ControlResourceSetld.

As one embodiment, the first-type index comprises a coresetPoolIndex.

As one embodiment, the first-type index comprises a SearchSpaceId.

As one embodiment, the first-type index comprises a cell index.

As one embodiment, the meaning of the sentence that each of the M resource sets corresponds to at least one first-type index comprises: each of the M resource sets is used for determining at least one of the first-type indexes.

As one embodiment, there is one resource set in the M resource sets that the corresponding first-type index is an identifier of one RS resource or a group of RS resources.

As one embodiment, there is one resource set in the M resource sets that the corresponding first-type index is one TCI-StateId or TCI-UL-State-Id.

As one embodiment, there is one resource set in the M resource sets that the corresponding first-type index is one ControlResourceSetId.

As one embodiment, there is one resource set in the M resource sets that the corresponding first-type index is one coresetPoolIndex.

As one embodiment, there is one resource set in the M resource sets that the corresponding first-type index is one cell index.

As one embodiment, the first-type index corresponding to each of the M resource sets is an identifier of one RS resource or a group of RS resources.

As one embodiment, the first-type index corresponding to each of the M resource sets is a TCI-StateId or a TCI-UL-State-Id.

As one embodiment, the first-type index corresponding to each of the M resource sets is a ControlResourceSetld.

As one embodiment, the first-type index corresponding to each of the M resource sets is a coresetPoolIndex.

As one embodiment, the first-type index corresponding to each of the M resource sets is a cell index.

As one embodiment, there is one given resource set in the M resource sets that the corresponding first-type index comprises a cell index associated with an RS resource of QCL-TypeD that is quasi co-located and corresponds to a PDCCH candidate in the given resource set.

As one embodiment, there is one given resource set in the M resource sets that the corresponding first-type index comprises a cell index associated with each RS resource of QCL-TypeD that is quasi co-located and corresponds to a PDCCH candidate in the given resource set.

As one embodiment, there is one given resource set in the M resource sets that the corresponding first-type index comprises a cell index associated with an RS resource corresponding to the QCL-TypeD that is indicated by a TCI state of the given resource set.

As one embodiment, there is one given resource set in the M resource sets that the corresponding first-type index comprises a cell index associated with an RS resource corresponding to the QCL-TypeD that is indicated by each activated TCI state of the given resource set.

As one embodiment, there is one given resource set in the M resource sets that the corresponding first-type index is equal to i, and the given resource set is configured to adopt the ith indicated TCI state.

As one embodiment, there is one given resource set in the M resource sets that the corresponding first-type index is equal to i, and the given resource set is configured by RRC to adopt the ith indicated TCI state.

As one embodiment, there is one given resource set in the M resource sets that the corresponding first-type index comprises an identifier of an RS resource indicated by a QCL-typeD property of the given resource set.

As one embodiment, there is one given resource set in the M resource sets that the corresponding first-type index comprises an identifier of an RS resource indicated by each QCL-typeD property of the given resource set.

As one embodiment, the first-type index corresponding to each of the M resource sets comprises a cell index associated with an RS resource of QCL-TypeD that is quasi co-located with and corresponds to a PDCCH candidate in the resource set.

As one embodiment, the first-type index corresponding to each of the M resource sets comprises a cell index associated with each RS resource of QCL-TypeD that is quasi co-located with and corresponds to a PDCCH candidate in the resource set.

As one embodiment, the first-type index corresponding to each of the M resource sets comprises a cell index associated with an RS resource corresponding to the QCL-TypeD that is indicated by the TCI state of the resource set.

As one embodiment, the first-type index corresponding to each of the M resource sets comprises a cell index associated with an RS resource corresponding to the QCL-TypeD that is indicated by each activated TCI state of the resource set.

As one embodiment, a cell index associated with one RS resource comprises: a cell index of a cell in which the one RS resource is configured.

As one embodiment, a cell index associated with one RS resource comprises: a cell index of a cell in which the one RS resource is transmitted.

As one embodiment, a cell identifier associated with one RS resource comprises: a cell identifier of a cell in which an RRC IE configuring the one RS resource is comprised.

As one embodiment, a cell index associated with one RS resource comprises: a cell index of a cell in which one RS resource indicated by a TCI state of the one RS resource is configured.

As one embodiment, a cell index associated with one RS resource comprises: a cell index of a cell in which an RS resource that is indicated by a TCI state of the one RS resource and has a corresponding QCL type comprising typeD is configured.

As one embodiment, a cell index associated with one RS resource comprises: a cell index of a cell to which an SS/PBCH block indicated by the TCI state of the one RS resource belongs.

As one embodiment, a cell index associated with one RS resource comprises: a cell index of a cell to which an SS/PBCH block that is indicated by a TCI state of the one RS resource and has a corresponding QCL type comprising typeD belongs.

As one embodiment, a cell index associated with one RS resource comprises: a cell index associated with an SS/PBCH block indicated by the TCI state of the one RS resource.

As one embodiment, a cell index associated with one RS resource comprises: a cell index associated with an SS/PBCH block that is indicated by the TCI state of the one RS resource and has a corresponding QCL type comprising typeD. As one embodiment, the given resource set is any one of the M resource sets, the first-type index corresponding to the given resource set is equal to i, and the given resource set is configured to adopt the ith indicated TCI state.

As one embodiment, the given resource set is any one of the M resource sets, the first-type index corresponding to the given resource set is equal to i, and the given resource set is configured by RRC to adopt the ith indicated TCI state.

As one embodiment, the first-type index corresponding to each of the M resource sets comprises an identifier of an RS resource indicated by the QCL-typeD property of the resource set.

As one embodiment, the first-type index corresponding to each of the M resource sets comprises an identifier of an RS resource indicated by each QCL-typeD property of the resource set.

As one embodiment, there are two resource sets among the M resource sets, the first-type index corresponding to one of the two resource sets comprises an identifier of an RS resource of QCL-TypeD that is quasi co-located and corresponds to a PDCCH candidate of the one resource set, and the first-type index corresponding to the other resource set in the two resource sets comprises a CORESET pool index of the other resource set.

As one embodiment, there are two resource sets in the M resource sets, the first-type index corresponding to one of the two resource sets comprises an identifier of the TCI state of the one resource set, and the first-type index corresponding to the other resource set in the two resource sets comprises a CORESET pool index of the other resource set.

As one embodiment, the first node determines the first resource set only from among resource sets that meet the first condition among the M resource sets.

As one embodiment, the first resource set is determined from among resource sets that meet the first condition among the M resource sets.

As one embodiment, the first resource set meets the first condition.

As one embodiment, there is at least one resource set in the M resource sets that meets the first condition.

As one embodiment, the first condition comprises that the corresponding first-type index does not belong to the first index set.

As one embodiment, the first condition comprises that each of the corresponding first-type indexes does not belong to the first index set.

As one embodiment, the first condition comprises that at least one of the corresponding first-type indexes does not belong to the first index set.

As one embodiment, for any given resource set in the M resource sets, if the first-type index corresponding to the given resource set does not belong to the first index set, the given resource set meets the first condition.

As one sub-embodiment of the above embodiment, if each first-type index corresponding to the given resource set does not belong to the first index set, the given resource set meets the first condition.

As one sub-embodiment of the above embodiment, if at least one of the first-type indexes corresponding to the given resource set does not belong to the first index set, the given resource set meets the first condition.

As one sub-embodiment of the above embodiment, if the first-type index corresponding to the given resource set belongs to the first index set, the given resource set does not meet the first condition.

As one sub-embodiment of the above embodiment, if each of the first-type indexes corresponding to the given resource set belongs to the first index set, the given resource set does not meet the first condition.

As one sub-embodiment of the above embodiment, if at least one of the first-type indexes corresponding to the given resource set belongs to the first index set, the given resource set does not meet the first condition.

As one embodiment, the first condition comprises that the corresponding first-type index belongs to the first index set.

As one embodiment, the first condition comprises that each of the corresponding first-type indexes belongs to the first index set.

As one embodiment, the first condition comprises that at least one of the corresponding first-type indexes belongs to the first index set.

As one embodiment, for any given resource set in the M resource sets, if the first-type index corresponding to the given resource set belongs to the first index set, the given resource set meets the first condition.

As one sub-embodiment of the above embodiment, if each of the first-type indexes corresponding to the given resource set belongs to the first index set, the given resource set meets the first condition.

As one sub-embodiment of the above embodiment, if at least one of the first-type indexes corresponding to the given resource set belongs to the first index set, the given resource set meets the first condition.

As one sub-embodiment of the above embodiment, if the first-type index corresponding to the given resource set does not belong to the first index set, the given resource set does not meet the first condition.

As one sub-embodiment of the above embodiment, if each of the first-type indexes corresponding to the given resource set does not belong to the first index set, the given resource set does not meet the first condition.

As one sub-embodiment of the above embodiment, if at least one of the first-type indexes corresponding to the given resource set does not belong to the first index set, the given resource set does not meet the first condition.

As one embodiment, the first index set is used for indicating one or more of an activated RS resource, an activated TCI state, an activated antenna port, an activated CORESET, an activated CORESET pool, an activated TRP, an activated antenna panel, or an activated cell; and the first condition comprises that the corresponding first-type index belongs to the first index set.

As one sub-embodiment of the above embodiment, the first condition comprises that each of the corresponding first-type indexes belongs to the first index set.

As one embodiment, the first index set is used for indicating one or more of a deactivated RS resource, a deactivated TCI state, a deactivated antenna port, a deactivated CORESET, a deactivated CORESET pool, a deactivated TRP, a deactivated antenna panel, or a deactivated cell; and the first condition comprises that the corresponding first-type index does not belong to the first index set.

As one sub-embodiment of the above embodiment, the first condition comprises that each of the corresponding first-type indexes does not belong to the first index set.

As one embodiment, the first condition comprises: the QCL-typeD property is different from the QCL-typeD property of an RS resource indicated by any index in the first index set.

As one embodiment, the first condition comprises: the QCL-typeD property is different from the QCL-typeD property of an RS resource indicated by each index in the first index set.

As one embodiment, the first condition comprises: the QCL-typeD property is the same as the QCL-typeD property of an RS resource indicated by one index in the first index set.

As one embodiment, for any given resource set in the M resource sets, if the QCL-typeD property of the given resource set is different from the QCL-typeD property of an RS resource indicated by any index in the first index set, the given resource set meets the first condition.

As one embodiment, for any given resource set in the M resource sets, if the QCL-typeD property of the given resource set is different from the QCL-typeD property of an RS resource indicated by each index in the first index set, the given resource set meets the first condition.

As one embodiment, for any given resource set in the M resource sets, if the QCL-typeD property of the given resource set is the same as the QCL-typeD property of an RS resource indicated by one index in the first index set, the given resource set does not meet the first condition.

As one embodiment, for any given resource set in the M resource sets, if the QCL-typeD property of the given resource set is the same as the QCL-typeD property of an RS resource indicated by one index in the first index set, the given resource set meets the first condition.

As one embodiment, for any given resource set in the M resource sets, if the QCL-typeD property of the given resource set is different from the QCL-typeD property of an RS resource indicated by any index in the first index set, the given resource set does not meet the first condition.

As one embodiment, for any given resource set in the M resource sets, if the QCL-typeD property of the given resource set is different from the QCL-typeD property of an RS resource indicated by each index in the first index set, the given resource set does not meet the first condition.

### Embodiment 2

Embodiment 2 illustrates a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced) and future 5G systems. The network architecture 200 of LTE, LTE-A and future 5G systems is called an EPS (Evolved Packet System) 200. The 5G NR or LTE network architecture 200 may be referred to as a 5GS (5G System)/EPS (Evolved Packet System) 200 or some other suitable terminologies. The 5GS/EPS 200 may comprise one or more pieces of UE (User Equipment) 201, one piece of UE241 communicating with the UE201 via a sidelink, an NG-RAN (Next-Generation Radio Access Network) 202, a 5GC (5G CoreNetwork)/EPC (Evolved Packet Core) 210, an HSS (Home Subscriber Server)/UDM (Unified Data Management)220, and an Internet service 230. The 5GS/EPS200 may be interconnected with other access networks, but these entities/interfaces are not shown for simplicity. As shown in FIG. 2, the 5GS/EPS200 provides packet switching services, but those skilled in the art will readily appreciate that various concepts presented throughout the present application can be extended to networks that provide circuit switching services. The NG-RAN202 comprises an NR (New Radio) Node B (gNB) 203 and other gNB204. The gNB203 provides user and control plane protocol terminations toward the UE201. The gNB203 may be connected to other gNB204 via an Xn interface (e.g., backhaul). The gNB203 may also be referred to as a base station, a base transceiving station, a radio base station, a radio transceiving device, a transceiving device function, a basic service set (BSS), an extended service set (ESS), a TRP (Transmitter Receiver Point), or some other suitable terminologies. The gNB203 provides an access point to the 5GC/EPC210 for the UE201. Examples of the UE201 comprise a cellular phone, a smartphone, a Session Initiation Protocol (SIP) phone, a laptop computer, a personal digital assistant (PDA), a satellite radio, a global positioning system, a multimedia apparatus, a video apparatus, a digital audio player (e.g., an MP3 player), a camera, a game console, a drone, an aircraft, a narrowband physical network device, a machine type communication device, a land transportation vehicle, an automobile, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 via an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides UE IP address allocation and other functions. The P-GW/UPF213 is connected to the Internet service 230. The Internet service 230 comprises operator-corresponding Internet Protocol services, which may specifically comprise Internet, intranet, IMS (IP Multimedia Subsystem) and packet switching services.

As one embodiment, the first node in the present application comprises the gNB203.

As one embodiment, the second node in the present application comprises the UE201.

As one embodiment, a radio link between the UE201 and the gNB203 comprises a cellular network link.

As one embodiment, a sender of the first information block comprises the gNB203.

As one embodiment, a recipient of the first information block comprises the UE201.

As one embodiment, a sender of the first-type channel comprises the gNB203.

As one embodiment, a recipient of the first-type channel comprises the UE201.

As one embodiment, the UE201 supports the dynamically adaptation of spatial elements.

As one embodiment, the gNB203 supports the dynamically adaptation of spatial elements.

### Embodiment 3

Embodiment 3 illustrates a schematic diagram of an embodiment of a radio protocol architecture for a user plane and a control plane according to one embodiment of the present application, as shown in FIG. 3.

Embodiment 3 shows a schematic diagram of an embodiment of one radio protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 between a first communication node device (UE, a gNB, or an RSU in V2X) and a second communication node device (a gNB, UE, or an RSU in V2X) or between two pieces of UE using three layers: a Layer 1, a Layer 2, and a Layer 3. The Layer 1 (L1 layer) is the lowest layer and implements various PHY (Physical Layer) signal processing functions. The L1 layer will be referred to as a PHY301 herein. The Layer 2 (L2 layer) 305 is above the PHY301 and is responsible for a link between the first communication node device and the second communication node device, or between two pieces of UE. The L2 layer 305 comprises an MAC (Medium Access Control) sublayer 302, an RLC (Radio Link Control) sublayer 303, and a PDCP (Packet Data Convergence Protocol) sublayer 304, which terminate at the second communication node device. The PDCP sublayer 304 provides multiplexing between different radio bearers and logical channels. The PDCP sublayer 304 also provides security by encrypting data packets, and provides inter-cell mobility support of the first communication node device with respect to the second communication node devices. The RLC sublayer 303 provides segmentation and reassembly of upper-layer data packets, retransmission of lost data packets, and reordering of data packets to compensate for out-of-order reception due to an HARQ. The MAC sublayer 302 provides multiplexing between logical and transport channels. The MAC sublayer 302 is also responsible for allocating various radio resources (e.g., resource blocks) in one cell between the first communication node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using an RRC signaling between the second communication node device and the first communication node device. The radio protocol architecture for the user plane 350 comprises the Layer 1 (L1 layer) and the Layer 2 (L2 layer). The radio protocol architecture for the first communication node device and the second communication node device in the user plane 350 is substantially the same as the corresponding layers and sublayers in the control plane 300 for a physical layer 351, a PDCP sublayer 354 in the L2 layer 355, an RLC sublayer 353 in the L2 layer 355, and an MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first communication node device may have several upper layers above the L2 layer 355, comprising a network layer (e.g., an IP layer) terminating at the P-GW on the network side and an application layer terminating at the other end of the connection (e.g., remote UE and a server).

As one embodiment, the radio protocol architecture in FIG. 3 is applicable to a first node in the present application.

As one embodiment, the radio protocol architecture in FIG. 3 is applicable to a second node in the present application.

As one embodiment, the first information block is generated at the PHY301 or PHY351.

As one embodiment, the first information block is generated in the MAC sublayer 302 or the MAC sublayer 352.

As one embodiment, the first information block is generated in the RRC sublayer 306.

As one embodiment, the first-type channel is generated in the PHY301, or the PHY351.

As one embodiment, the first-type channel is generated in the MAC sublayer 302 or the MAC sublayer 352.

As one embodiment, the higher layer in the present application refers to a layer above a physical layer.

### Embodiment 4

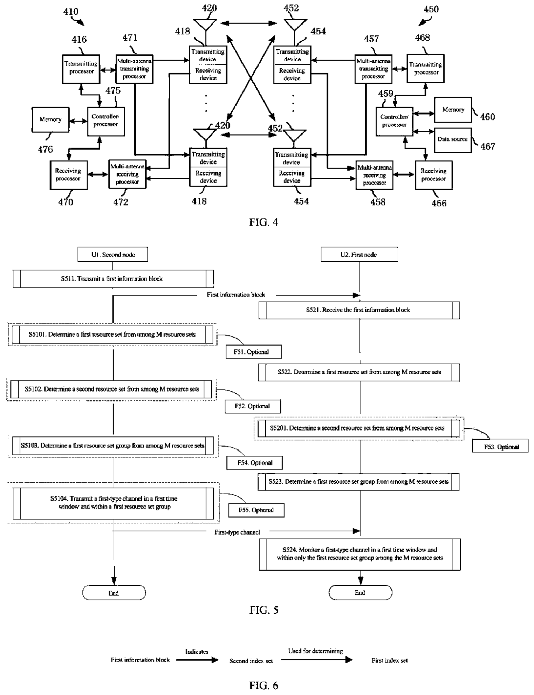

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418 and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In the transmission from the first communication device 410 to the second communication device 450, at the first communication device 410, upper-layer data packets from a core network are provided to the controller/processor 475. The controller/processor 475 implements the functionality of an L2 layer. In a DL, the controller/processor 475 provides header compression, encryption, packet segmentation and reordering, multiplexing between logical and transport channels, and radio resource allocation to the second communication device 450 based on various priority metrics. The controller/processor 475 is also responsible for HARQ operations, retransmission of lost packets, and signaling to the second communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 450, and constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more parallel streams. The transmitting processor 416 then maps each parallel stream to a subcarrier, multiplexes the modulated symbols with a reference signal (e.g., pilot) in a time domain and/or frequency domain, and then uses an inverse fast Fourier transform (IFFT) to generate a physical channel carrying a time-domain multi-carrier symbol stream. The multi-antenna transmitting processor 471 then performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the first communication device 410 to the second communication device 450, at the second communication device 450, each receiving device 454 receives a signal through a corresponding antenna 452 thereof. Each receiving device 454 recovers information modulated onto a radio frequency carrier, and converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream from a time domain to a frequency domain after the receiving analog precoding/beamforming operation. In the frequency domain, a physical layer data signal and a reference signal are demultiplexed by the receiving processor 456, wherein the reference signal will be used for a channel estimation, and the data signal is recovered after multi-antenna detection in the multi-antenna receiving processor 458 to any parallel stream destined for the second communication device 450. Symbols on each parallel stream are demodulated and recovered in the receiving processor 456, and soft decisions are generated. The receiving processor 456 then decodes and deinterleaves the soft decisions to recover upper-layer data and control signals transmitted by the first communication device 410 on a physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In a DL, the controller/processor 459 provides demultiplexing between transport and logical channels, packet reassembly, decryption, header decompression, and control signal processing to recover the upper-layer data packets from the core network. The upper-layer data packets are then provided to all protocol layers above the L2 layer. Various control signals may also be provided to an L3 for L3 processing. The controller/processor 459 is also responsible for error detection using an acknowledgement (ACK) and/or negative acknowledgement (NACK) protocol to support HARQ operations.

In the transmission from the second communication device 450 to the first communication device 410, at the second communication device 450, a data source 467 is used for providing upper-layer data packets to the controller/processor 459. The data source 467 represents all protocol layers above the L2 layer. Similar to the transmission function at the first communication device 410 described in the DL, the controller/processor 459 implements header compression, encryption, packet segmentation and reordering, and multiplexing between logical and transport channels based on radio resource allocation of the first communication device 410, and implements L2 layer functions for the user plane and the control plane. The controller/processor 459 is also responsible for HARQ operations, retransmission of lost packets, and signaling to the first communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then the transmitting processor 468 will modulate a generated parallel stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the second communication device 450 to the first communication device 410, the functions at the first communication device 410 is similar to the receiving function at the second communication device 450 described in the transmission from the first communication device 410 to the second communication device 450. Each receiving device 418 receives a radio frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. The controller/processor 475 provides demultiplexing between transport and logical channels, packet reassembly, decryption, header decompression and control signal processing to recover upper-layer data packets from the second communication device 450. The upper-layer data packets from the controller/processor 475 may be provided to the core network. The controller/processor 475 is also responsible for error detection using an ACK and/or NACK protocol to support HARQ operations.

As one embodiment, the second communication device 450 comprises: at least one processor and at least one memory, the at least one memory comprising a computer program code; and the at least one memory and the computer program code are configured to be used together with the at least one processor. The second communication device 450 apparatus at least receives the first information block; and determines the first resource set and the first resource set group from the M resource sets, and monitors the first-type channel in the first time window and within only the first resource set group among the M resource sets. The first information block is used for determining a first index set; M is a positive integer greater than 1, and the first resource set group comprises at least one of the M resource sets; any two of the M resource sets overlap in a time domain in the first time window, and the first resource set group comprises the first resource set; the first resource set group depends on the QCL-typeD property of the first resource set; the second communication device 450 determines the first resource set from among resource sets that meet a first condition among the M resource sets; and the first condition is related to the first index set.

As one embodiment, the second communication device 450 comprises: a memory storing a computer-readable instruction program, and the computer-readable instruction program generates actions when executed by at least one processor, the actions comprising: determining the first resource set and the first resource set group from among the M resource sets, and monitoring the first-type channel in the first time window and within only the first resource set group among the M resource sets.

As one embodiment, the first communication device 410 comprises: at least one processor and at least one memory, the at least one memory comprising computer program codes; the at least one memory and the computer program codes are configured to be used together with the at least one processor. and the at least one memory and the computer program code are configured to be used together with the at least one processor. The first communication device 410 apparatus at least transmits the first information block and transmits or abandons the transmission of the first-type channel in the first time window and within the first resource set group. The first information block is used for determining a first index set; the first resource set group comprises at least one of the M resource sets, M is a positive integer greater than 1, any two of the M resource sets overlap in a time domain in the first time window, a target recipient of the first information block determines a first resource set and the first resource set group from among the M resource sets, and monitors the first-type channel within only the first resource set group among the M resource sets; the first resource set group comprises the first resource set; the first resource set group depends on the QCL-typeD property of the first resource set; each of the M resource sets corresponds to at least one first-type index; the target recipient of the first information block determines the first resource set from among resource sets that meet a first condition among the M resource sets; and the first condition is related to the first index set.

As one embodiment, the first communication device 410 comprises: a memory storing a computer-readable instruction program, the computer-readable instruction program generates actions when executed by at least one processor, the actions comprising: transmitting the first information block, and transmitting or abandoning the transmission of the first-type channel in the first time window and within the first resource set group.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first information block; and at least one of {the antenna 420, the transmitting device 418, the transmitting processor 416, the multi-antenna transmitting processor 471, the controller/processor 475, and the memory 476} is used for transmitting the first information block.

As one embodiment, at least one of {the antenna 452, the receiving device 454, the receiving processor 456, the multi-antenna receiving processor 458, the controller/processor 459, the memory 460, and the data source 467} is used for determining a first resource set and a first resource set group from among M resource sets.

As one embodiment, at least one of {the antenna 452, the receiving device 454, the receiving processor 456, the multi-antenna receiving processor 458, the controller/processor 459, the memory 460, and the data source 467} is used for monitoring the first-type channel in the first time window and within only the first resource set group among the M resource sets; and at least one of {the antenna 420, the transmitting device 418, the transmitting processor 416, the multi-antenna transmitting processor 471, the controller/processor 475, and the memory 476} is used for transmitting or abandoning the transmission of the first-type channel in the first time window and within the first resource set group.

### Embodiment 5

FIG. 5 illustrates a flowchart of transmission according to one embodiment of the present application, as shown in FIG. 5. In the FIG. 5, a second node U1 and a first node U2 are communication nodes transmitted via an air interface. In FIG. 5, steps in blocks F51 to F55 are respectively optional.

For the second node U1, in step S511, a first information block is transmitted; in step S5101, a first resource set is determined from among M resource sets; in step S5102, a second resource set is determined from among the M resource sets; in step S5103, a first resource set group is determined from among the M resource sets; and in step S5104, a first-type channel is transmitted in a first time window and within the first resource set group.

For the first node U2, in step S521, a first information block is received; in step S522, a first resource set is determined from among M resource sets; in step S5201, a second resource set is determined from among the M resource sets; in step S523, a first resource set group is determined from among the M resource sets; and in step S524, a first-type channel is monitored in a first time window and within only the first resource set group among the M resource sets.

In Embodiment 5, the first information block is used by the first node U2 for determining the first index set; M is a positive integer greater than 1, and the first resource set group comprises at least one of the M resource sets; any two of the M resource sets overlap in a time domain in the first time window, and the first resource set group comprises the first resource set; the first resource set group depends on the QCL-typeD property of the first resource set; the first node U2 determines the first resource set from the resource sets that meet the first condition among the M resource sets; and the first condition is related to the first index set.

As one embodiment, the first node U2 is the first node in the present application.

As one embodiment, the second node U1 is the second node in the present application.

As one embodiment, an air interface between the first node U2 and the second node U1 comprises a wireless interface between a base station device and user equipment.

As one embodiment, the air interface between the first node U2 and the second node U1 comprises a wireless interface between a relay node device and user equipment.

As one embodiment, the first node U2 is a serving cell maintenance base station of the second node U1.

As one embodiment, the first information block is transmitted in a PDSCH (Physical Downlink Shared Channel).

As one embodiment, the first information block is transmitted in a PDCCH (Physical Downlink Control Channel).

As one embodiment, the target recipient of the first information block is a target recipient of the first-type channel.

As one embodiment, the target recipient of the first information block is a target recipient of a DCI format transmitted in the first-type channel.

As one embodiment, a CRC of the DCI format transmitted in the first-type channel is scrambled by an RNTI (Radio Network Temporary Identifier)of the target recipient of the first information block.

As one embodiment, an RNTI of the target recipient of the first information block comprises a C (Cell)-RNTI.

As one embodiment, an RNTI of the target recipient of the first information block comprises an MCS (Modulation and Coding Scheme)-C-RNTI.

As one embodiment, an RNTI of the target recipient of the first information block comprises a CS (Configured Scheduling)-RNTI.

As one embodiment, the steps in block F51 in FIG. 5 exist, and the method used in the second node for wireless communications comprises:
determining the first resource set from the M resource sets.

As one embodiment, the second node determines the first resource set from among resource sets that meet the first condition among the M resource sets.

As one embodiment, the second node uses the same method as the first node to determine the first resource set from among resource sets that meet the first condition among the M resource sets.

As one embodiment, the steps in block F53 in FIG. 5 exist, and the method used in the first node for wireless communications comprises:
determining the second resource set from among the M resource sets;
wherein the first resource set group comprises the second resource set; one search space set associated with the first resource set and one search space set associated with the second resource set comprise a first-type parameter set to the same value; and the first resource set group depends on the QCL-typeD property of the second resource set.

As one embodiment, the steps in block F52 in FIG. 5 exist, and the method used in the second node for wireless communications comprises:
determining the second resource set from among the M resource sets.

As one embodiment, the second node uses the same method as the first node to determine the second resource set from among the M resource sets.

As one embodiment, the steps in block F54 in FIG. 5 exist, and the method used in the second node for wireless communications comprises:
determining the first resource set group from among the M resource sets.

As one embodiment, the second node uses the same method as the first node to determine the first resource set group from among the M resource sets.

As one embodiment, the step in block F55 in FIG. 5 exists, and the second node transmits the first-type channel in the first time window and within the first resource set group.

As one embodiment, the step in block F55 in FIG. 5 does not exist, and the second node abandons the transmission of the first-type channel in the first time window and within the first resource set group.

As one embodiment, the second node independently determines whether to transmit or abandon the transmission of the first-type channel in the first time window and within the first resource set group.

### Embodiment 6

Embodiment 6 illustrates a schematic diagram of a first information block being used for determining a first index set according to one embodiment of the present application, as shown in FIG. 6. In Embodiment 6, the first information block indicates a second index set, and the second index set comprises one or more indexes; and a first given index is any index in the first index set, and the second index set is used for determining the first given index.

As one embodiment, the first given index indicates a given TCI state, the second given index in the second index set indicates a given RS resource, and the given RS resource is used for determining the given TCI state.

As one sub-embodiment of the above embodiment, the first given index is an identifier of the given TCI state.

As one sub-embodiment of the above embodiment, the second given index is an identifier of the given RS resource.

As one sub-embodiment of the above embodiment, an RS resource indicated by the given TCI state comprises the given RS resource.

As one sub-embodiment of the above embodiment, an RS resource corresponding to QCL-typeD that is indicated by the given TCI state is the given RS resource.

As one sub-embodiment of the above embodiment, one RS resource indicated by the given TCI state is quasi co-located with the given RS resource.

As one sub-embodiment of the above embodiment, one RS resource indicated by the given TCI state is quasi co-located with the given RS resource in correspondence to QCL-typeD.

As one sub-embodiment of the above embodiment, the RS resource corresponding to the QCL-typeD that is indicated by the given TCI state is quasi co-located with the given RS resource.

As one sub-embodiment of the above embodiment, one RS resource indicated by the given TCI state and the given RS resource are both quasi co-located with the same RS resource.

As one sub-embodiment of the above embodiment, one RS resource indicated by the given TCI state and the given RS resource are both quasi co-located with the same RS resource in correspondence to QCL-typeD.

As one sub-embodiment of the above embodiment, the RS resource corresponding to the QCL-typeD that is indicated by the given TCI state and the given RS resource are both quasi co-located with the same RS resource.

As one sub-embodiment of the above embodiment, the RS resource corresponding to the QCL-typeD that is indicated by the given TCI state and the given RS resource are both quasi co-located with the same RS resource in correspondence to QCL-typeD.

As one embodiment, the first given index indicates a first given RS resource, the second given index in the second index set indicates a second given RS resource, and the second given RS resource is used for determining the first given RS resource.

As one sub-embodiment of the above embodiment, the first given index is an identifier of the first given RS resource.

As one sub-embodiment of the above embodiment, the second given index is an identifier of the second given RS resource.

As one sub-embodiment of the above embodiment, the second given RS resource is quasi co-located with the first given RS resource.

As one sub-embodiment of the above embodiment, the second given RS resource is in quasi co-location with the first given RS resource in correspondence to QCL-typeD.

As one sub-embodiment of the above embodiment, the second given RS resource and the first given RS resource are both quasi co-located with the same RS resource.

As one sub-embodiment of the above embodiment, the second given RS resource and the first given RS resource are both quasi co-located with the same RS resource in correspondence to QCL-typeD.

As one embodiment, the first given index indicates a given CORESET, the second given index in the second index set indicates a given RS resource, and the given RS resource is used for determining the given CORESET.

As one sub-embodiment of the above embodiment, the first given index is a ControlResourceSetId of the given CORESET.

As one sub-embodiment of the above embodiment, the second given index is an identifier of the given RS resource.

As one sub-embodiment of the above embodiment, the RS resource indicated by the TCI state of the given CORESET comprises the given RS resource.

As one sub-embodiment of the above embodiment, an RS resource corresponding to the QCL-typeD state that is indicated by the TCI state of the given CORESET is the given RS resource.

As one sub-embodiment of the above embodiment, one RS resource indicated by the TCI state of the given CORESET is quasi co-located with the given RS resource.

As one sub-embodiment of the above embodiment, one RS resource indicated by the TCI state of the given CORESET is quasi co-located with the given RS resource in correspondence to QCL-typeD.

As one sub-embodiment of the above embodiment, the RS resource corresponding to the QCL-typeD state that is indicated by the TCI state of the given CORESET is quasi co-located with the given RS resource.

As one sub-embodiment of the above embodiment, the RS resource corresponding to the QCL-typeD state that is indicated by the TCI state of the given CORESET is quasi co-located with the given RS resource in correspondence to QCL-typeD.

As one sub-embodiment of the above embodiment, one RS resource indicated by the TCI state of the given CORESET and the given RS resource are both quasi co-located with the same RS resource.

As one sub-embodiment of the above embodiment, one RS resource indicated by the TCI state of the given CORESET and the given RS resource are both quasi co-located with the same RS resource in correspondence to QCL-typeD.

As one sub-embodiment of the above embodiment, the RS resource corresponding to the QCL-typeD state that is indicated by the TCI state of the given CORESET and the given RS resource are both quasi co-located with the same RS resource.

As one embodiment, the first given index indicates a given TCI state, and the second given index in the second index set is used for determining the given TCI state.

As one sub-embodiment of the above embodiment, the first given index is an identifier of the given TCI state.

As one sub-embodiment of the above embodiment, the given TCI state is the ith TCI state mapped by one TCI code point, wherein i is equal to the second given index.

As one sub-embodiment of the above embodiment, the given TCI state is the ith TCI state mapped by one TCI code point, wherein i is equal to the second given index plus 1.

As one sub-embodiment of the above embodiment, the second given index is one cell index, and the cell index corresponding to the given TCI state is equal to the second given index.

As one embodiment, the first given index indicates a given CORESET pool, and the second index set is used for determining the given CORESET pool.

As one sub-embodiment of the above embodiment, the first given index is a coresetPoolIndex of the given CORESET pool.

As one sub-embodiment of the above embodiment, the given CORESET is any CORESET in the given CORESET pool, at least one index in the second index set indicates one RS resource or a group of RS resources, and the given CORESET is related to one RS or a group of RSs indicated by at least one index in the second index set.

As one reference embodiment of the above sub-embodiment, each CORESET in the given CORESET pool is related to one RS or a group of RSs indicated by at least one index in the second index set.

As one reference embodiment of the above sub-embodiment, at least one index in the second index set is an identifier of one RS resource.

As one reference embodiment of the above sub-embodiment, the RS resource indicated by the TCI state of the given CORESET is an RS resource indicated by one index in the second index set.

As one reference embodiment of the above sub-embodiments, the RS resource corresponding to the QCL-typeD that is indicated by the TCI state of the given CORESET is an RS resource indicated by one index in the second index set.

As one reference embodiment of the above sub-embodiment, one RS resource indicated by the TCI state of the given CORESET is quasi co-located with the RS resource indicated by one index in the second index set.

As one reference embodiment of the above sub-embodiment, one RS resource indicated by the TCI state of the given CORESET is quasi co-located with the RS resource indicated by one index in the second index set in correspondence to QCL-typeD.

As one reference embodiment of the above sub-embodiments, the RS resource corresponding to the QCL-typeD that is indicated by the TCI state of the given CORESET is quasi co-located with the RS resource indicated by one index in the second index set.

As one reference embodiment of the above sub-embodiment, one RS resource indicated by the TCI state of the given CORESET and the RS resource indicated by one index in the second index set are both quasi co-located with the same RS resource.

As one reference embodiment of the above sub-embodiment, one RS resource indicated by the TCI state of the given CORESET and the RS resource indicated by one index in the second index set are both quasi co-located with the same RS resource in correspondence to QCL-typeD.

As one reference embodiment of the above sub-embodiments, the RS resource corresponding to the QCL-typeD that is indicated by the TCI state of the given CORESET and the RS resource indicated by one index in the second index set are both quasi co-located with the same RS resource.

As one sub-embodiment of the above embodiment, at least one index in the second index set is one cell index, and the cell index corresponding to the TCI state of each CORESET in the given CORESET pool is equal to one cell index in the second index set.

As one sub-embodiment of the above embodiment, the second given index is one index in the second index set, each CORESET in the given CORESET pool is configured to adopt the ith indicated TCI state, and i is equal to the second given index or equal to the second given index plus 1.

As one reference embodiment of the above sub-embodiment, any CORESET in the given CORESET pool is configured by RRC to adopt the ith indicated TCI state.

As one embodiment, the indicated TCI state is indicated by a DCI format 1_1 or a DCI format 1_2.

As one embodiment, the indicated TCI state is indicated by a DCI field Transmission configuration indication in the DCI format 1_1 or the DCI format 1_2 when the first node is configured with a higher-layer parameter dl-OrJoint-TCIStateList.

As one embodiment, the first given index indicates a given TCI state, and the second index set is used for determining the given TCI state.

As one sub-embodiment of the above embodiment, the first given index is an identifier of the given TCI state.

As one sub-embodiment of the above embodiment, the RS resource indicated by the given TCI state is not the RS resource indicated by any index in the second index set.

As one sub-embodiment of the above embodiment, the RS resource corresponding to the QCL-typeD that is indicated by the given TCI state is not the RS resource indicated by any index in the second index set.

As one sub-embodiment of the above embodiment, the RS resource indicated by the given TCI state and the RS resource indicated by any index in the second index set are not quasi co-located.

As one sub-embodiment of the above embodiment, the RS resource corresponding to the QCL-typeD that is indicated by the given TCI state and the RS resource indicated by any index in the second index set are not quasi co-located.

As one sub-embodiment of the above embodiment, the RS resource corresponding to the QCL-typeD that is indicated by the given TCI state and the RS resource indicated by any index in the second index set are not quasi co-located in correspondence to QCL-typeD.

As one sub-embodiment of the above embodiment, one RS resource indicated by the given TCI state and the RS resource indicated by any index in the second index set are not quasi co-located with the same RS resource.

As one sub-embodiment of the above embodiment, the RS resource corresponding to the QCL-typeD that is indicated by the given TCI state and the RS resource indicated by any index in the second index set are not quasi co-located with the same RS resource.

As one sub-embodiment of the above embodiment, the RS resource corresponding to the QCL-typeD that is indicated by the given TCI state and the RS resource indicated by any index in the second index set are quasi co-located with the same RS resource in correspondence to QCL-typeD.

As one embodiment, the first given index indicates a first given RS resource, and the second index set is used for determining the first given RS resource.

As one sub-embodiment of the above embodiment, the first given index is an identifier of the first given RS resource.

As one sub-embodiment of the above embodiment, the first given RS resource is not quasi co-located with the RS resource indicated by any index in the second index set.

As one sub-embodiment of the above embodiment, the first given RS resource is not quasi co-located with the RS resource indicated by any index in the second index set in correspondence to QCL-typeD.

As one sub-embodiment of the above embodiment, the first given RS resource and the RS resource indicated by any index in the second index set are not quasi co-located with the same RS resource.

As one sub-embodiment of the above embodiment, the first given RS resource and the RS resource indicated by any index in the second index set are not quasi co-located with the same RS resource in correspondence to QCL-typeD.

As one embodiment, the first given index indicates a given CORESET, and the second index set is used for determining the given CORESET.

As one sub-embodiment of the above embodiment, the first given index is a ControlResourceSetId of the given CORESET.

As one sub-embodiment of the above embodiment, an RS resource indicated by the TCI state of the given CORESET does not comprise the RS resource indicated by any index in the second index set.

As one sub-embodiment of the above embodiment, the RS resource corresponding to QCL-typeD that is indicated by the TCI state of the given CORESET is not the RS resource indicated by any index in the second index set.

As one sub-embodiment of the above embodiment, one RS resource indicated by the TCI state of the given CORESET is not quasi co-located with the RS resource indicated by any index in the second index set.

As one sub-embodiment of the above embodiment, one RS resource indicated by the TCI state of the given CORESET is not quasi co-located with the RS resource indicated by any index in the second index set in correspondence to QCL-typeD.

As one sub-embodiment of the above embodiment, the RS resource corresponding to QCL-typeD that is indicated by the TCI state of the given CORESET is not quasi co-located with the RS resource indicated by any index in the second index set.

As one sub-embodiment of the above embodiment, one RS resource indicated by the TCI state of the given CORESET and the RS resource indicated by any index in the second index set are not quasi co-located with the same RS resource.

As one sub-embodiment of the above embodiment, one RS resource indicated by the TCI state of the given CORESET and the RS resource indicated by any index in the second index set are not quasi co-located with the same RS resource in correspondence to QCL-typeD.

As one sub-embodiment of the above embodiment, the RS resource corresponding to QCL-typeD that is indicated by the TCI state of the given CORESET and the RS resource indicated by any index in the second index set are not quasi co-located with the same RS resource.

As one embodiment, the first given index indicates a given TCI state, and the second index set is used for determining the given TCI state.

As one sub-embodiment of the above embodiment, the first given index is an identifier of the given TCI state.

As one sub-embodiment of the above embodiment, the given TCI state is the ith TCI state mapped by one TCI code point, wherein i is not equal to any index in the second index set.

As one sub-embodiment of the above embodiment, the given TCI state is the ith TCI state mapped by one TCI code point, wherein i is not equal to any index in the second index set plus 1.

As one sub-embodiment of the above embodiment, the cell index corresponding to the given TCI state is not equal to any index in the second index set.

As one embodiment, the first given index indicates a given CORESET pool, and the second index set is used for determining the given CORESET pool.

As one sub-embodiment of the above embodiment, the first given index is a coresetPoolIndex of the given CORESET pool.

As one sub-embodiment of the above embodiment, an RS resource indicated by the TCI state of any CORESET in the given CORESET pool is not the RS resource indicated by any index in the second index set.

As one sub-embodiment of the above embodiment, the RS resource corresponding to the QCL-typeD that is indicated by the TCI state of any CORESET in the given CORESET pool is not the RS resource indicated by any index in the second index set.

As one sub-embodiment of the above embodiment, one RS resource indicated by the TCI state of any CORESET in the given CORESET pool is not quasi co-located with the RS resource indicated by any index in the second index set;
as one sub-embodiment of the above embodiment, one RS resource indicated by the TCI state of any CORESET in the given CORESET pool is not quasi co-located with the RS resource indicated by any index in the second index set in correspondence to QCL-typeD;
as one sub-embodiment of the above embodiment, an RS resource corresponding to the QCL-typeD that is indicated by the TCI state of any CORESET in the given CORESET pool is not quasi co-located with the RS resource indicated by any index in the second index set;
as one sub-embodiment of the above embodiment, one RS resource indicated by the TCI state of any CORESET in the given CORESET pool and the RS resource indicated by any index in the second index set are not quasi co-located with the same RS resource;
as one sub-embodiment of the above embodiment, one RS resource indicated by the TCI state of any CORESET in the given CORESET pool and the RS resource indicated by any index in the second index set are not quasi co-located with the same RS resource in correspondence to QCL-typeD; and
as one sub-embodiment of the above embodiment, an RS resource corresponding to the QCL-typeD that is indicated by the TCI of any CORESET in the given CORESET pool and the RS resource indicated by any index in the second index set are not quasi co-located with the same RS resource.

As one sub-embodiment of the above embodiment, a cell index corresponding to the TCI state of any CORESET in the given CORESET pool is not equal to any index in the second index set.

As one sub-embodiment of the above embodiment, for any CORESET in the given CORESET pool, the any CORESET is configured to adopt the ith indicated TCI state, and i is not equal to any index in the second index set.

As one sub-embodiment of the above embodiment, for any CORESET in the given CORESET pool, the any CORESET is configured to adopt the ith indicated TCI state, and i is not equal to any index in the second index set plus 1.

### Embodiment 7

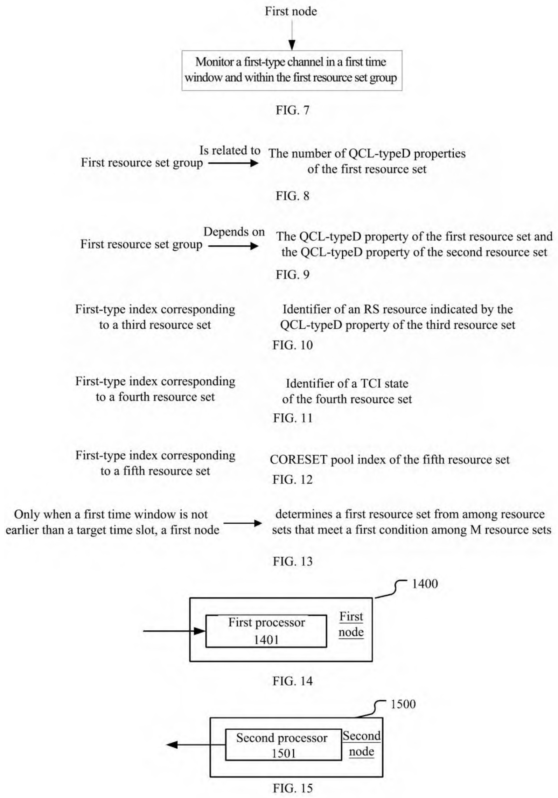

Embodiment 7 illustrates a schematic diagram of a first node monitoring a first-type channel in a first time window and within a first resource set group according to one embodiment of the present application, as shown in FIG. 7.

As one embodiment, the first-type channel comprises a physical channel.

As one embodiment, the first-type channel is a physical channel.

As one embodiment, the first-type channel comprises a downlink physical layer control channel (i.e., a downlink channel that can only be used for bearing physical layer signaling).

As one embodiment, the first-type channel comprises a PDCCH.

As one embodiment, the first-type channel is a PDCCH.

As one embodiment, the first-type channel comprises a PDCCH candidate.

As one embodiment, the first-type channel is a PDCCH candidate.

As one embodiment, the first-type channel is used for carrying a DCI format.

As one embodiment, the meaning of the phrase of monitoring a first-type channel comprises: monitoring a PDCCH.

As one embodiment, the meaning of the phrase of monitoring a first-type channel comprises: monitoring a PDCCH candidate.

As one embodiment, the meaning of the phrase of monitoring a first-type channel comprises: monitoring a DCI format.

As one embodiment, the meaning of the phrase of monitoring a first-type channel comprises: monitoring a PDCCH candidate to judge whether the first-type channel is detected.

As one embodiment, the meaning of the phrase of monitoring a first-type channel comprises: monitoring a PDCCH candidate to judge whether a DCI format is detected.

As one embodiment, the meaning of the phrase of monitoring a first-type channel comprises: monitoring a PDCCH candidate to judge whether a DCI format is detected to be transmitted in the first-type channel.

As one embodiment, the monitoring refers to blind decoding, and the meaning of the sentence of monitoring a first-type channel comprises: performing a decoding operation; and if it is determined that the decoding is correct according to CRC (Cyclic Redundancy Check), judging that one DCI format is detected; otherwise, judging that the DCI format is not detected.

As one embodiment, the monitoring refers to blind decoding, and the meaning of the sentence of monitoring a first-type channel comprises: performing a decoding operation; and if it is determined that the decoding is correct according to CRC, judging that one of the first-type channels is detected; otherwise, judging that the first-type channel is not detected.

As one embodiment, the monitoring refers to blind decoding, and the meaning of the sentence of monitoring a first-type channel comprises: performing a decoding operation; and if it is determined that the decoding is correct according to CRC, judging that one DCI format is detected to be transmitted in the first-type channel; otherwise, judging that the DCI format is not detected.

As one embodiment, the monitoring refers to coherent detection, and the meaning of the sentence of monitoring a first-type channel comprises: performing coherent reception and measuring the energy of a signal obtained after the coherent reception; and if the energy of the signal obtained after the coherent reception is greater than a first given threshold, judging that one DCI format is detected to be transmitted in the first-type channel; otherwise, judging that the DCI format is not detected.

As one embodiment, the monitoring refers to energy detection, and the meaning of the sentence of monitoring a first-type channel comprises: sensing the energy of wireless signals and averaging to obtain the received energy; if the received energy is greater than a second given threshold, judging that one DCI format is detected to be transmitted in the first-type channel; otherwise, judging that the DCI format is not detected.

As one embodiment, the meaning of the sentence of monitoring a first-type channel comprises: determining whether the first-type channel is transmitted according to CRC, and not determining whether the first-type channel is transmitted before judging whether the decoding is correct according to CRC.

As one embodiment, the meaning of the sentence of monitoring a first-type channel comprises: determining whether a DCI format is transmitted in the first-type channel according to CRC, and not determining whether there is a DCI format to be transmitted in the first-type channel before judging whether decoding is correct according to the CRC.

### Embodiment 8

FIG. 8 shows a schematic diagram of a first resource set group being related to the number of QCL-typeD properties of a first resource set according to one embodiment of the present application, as shown in FIG. 8.

As one embodiment, the first resource set has only one QCL-typeD property.

As one embodiment, the first resource set has two QCL-typeD properties.

As one embodiment, the first resource set has a plurality of QCL-typeD properties.

As one embodiment, at least one TCI state is used for determining the QCL (Quasi Co-Location) property of the first resource set, and the at least one TCI state is used for determining the QCL-typeD property of the first resource set.

As one embodiment, only one TCI state is used for determining the QCL property of the first resource set, the first resource set has only one QCL-typeD property, and the only one TCI state indicates the one QCL-typeD property of the first resource set.

As one embodiment, the first resource set has two activated TCI states, the first resource set has two QCL-typeD properties, and the two activated TCI states respectively indicate the two QCL-typeD properties of the first resource set.

As one embodiment, if the first resource set has two activated TCI states, the first resource set has two QCL-typeD properties.

As one embodiment, if the first resource set has two activated TCI states, the first resource set has two QCL-typeD properties; otherwise, the first resource set has only one QCL-typeD property.

As one embodiment, any resource set in the first resource set group has the same QCL-typeD properties as the first resource set.

As one embodiment, the first resource set group comprises resource sets having the same QCL-typeD property as the first resource set in the M resource sets.

As one embodiment, the first resource set group is composed of resource sets having the same QCL-typeD property as the first resource set in the M resource sets.

As one embodiment, the first resource set has only one QCL-typeD property, and the first resource set group comprises resource sets having the same QCL-typeD property as the first resource set in the M resource sets.

As one embodiment, the first resource set has only one QCL-typeD property, and the first resource set group is composed of resource sets having the same QCL-typeD property as the first resource set in the M resource sets.

As one embodiment, the first resource set has a first QCL-typeD property and a second QCL-typeD property, and the first QCL-typeD property is different from the second QCL-typeD property; and any resource set in the first resource set group has the same QCL-typeD property as the first QCL-typeD property or the second QCL-typeD property.

As one embodiment, the first resource set has a first QCL-typeD property and a second QCL-typeD property, and the first QCL-typeD property is different from the second QCL-typeD property; and the first resource set group comprises resource sets having the same QCL-typeD property as the first QCL-typeD property or the second QCL-typeD property in the M resource sets.

As one embodiment, the first resource set has a first QCL-typeD property and a second QCL-typeD property, and the first QCL-typeD property is different from the second QCL-typeD property; and the first resource set group is composed of resource sets having the same QCL-typeD property as the first QCL-typeD property or the second QCL-typeD property in the M resource sets.

As one embodiment, one SS/PBCH block and one CSI-RS have different QCL-typeD properties.

As one embodiment, two CSI-RSs associated with the same SS/PBCH block have the same QCL-typeD property.

As one embodiment, two CSI-RSs quasi co-located with the same SS/PBCH block have the same QCL-typeD property.

As one embodiment, two CSI-RSs quasi co-located with the same SS/PBCH block and corresponding to QCL-TypeD have the same QCL-typeD property.

As one embodiment, the meaning that one QCL-typeD property is different from another QCL-typeD property comprises: an RS resource indicated by the one QCL-typeD property and an RS resource indicated by the another QCL-typeD property are respectively quasi co-located with different RS resources.

As one embodiment, the meaning that one QCL-typeD property is different from another QCL-typeD property comprises: an RS resource indicated by the one QCL-typeD property and an RS resource indicated by the another QCL-typeD property are respectively quasi co-located with different RS resources in correspondence to QCL-TypeD.

As one embodiment, the meaning that one QCL-typeD property is different from another QCL-typeD property comprises: the one QCL-typeD property and the another QCL-typeD property respectively indicate different SS/PBCH block resources.

As one embodiment, the meaning that one QCL-typeD property is different from another QCL-typeD property comprises: an RS resource indicated by the one QCL-typeD property and an RS resource indicated by the another QCL-typeD property are respectively quasi co-located with different SS/PBCH block resources.

As one embodiment, the meaning that one QCL-typeD property is different from another QCL-typeD property comprises: an RS resource indicated by the one QCL-typeD property and an RS resource indicated by the another QCL-typeD property are respectively quasi co-located with different SS/PBCH block resources in correspondence to QCL-TypeD.

As one embodiment, the meaning that one QCL-typeD property and another QCL-typeD property are the same comprises: an RS resource indicated by the one QCL-typeD property and an RS resource indicated by the another QCL-typeD property are quasi co-located with the same RS resource.

As one embodiment, the meaning that one QCL-typeD property and another QCL-typeD property are the same comprises: an RS resource indicated by the one QCL-typeD property and an RS resource indicated by the another QCL-typeD property are quasi co-located with the same RS resource and correspond to the QCL-TypeD.

As one embodiment, the meaning that one QCL-typeD property and another QCL-typeD property are the same comprises: an RS resource indicated by the one QCL-typeD property and an RS resource indicated by the another QCL-typeD property are the same RS resource.

As one embodiment, the meaning that one QCL-typeD property and another QCL-typeD property are the same comprises: an RS resource indicated by the one QCL-typeD property is quasi co-located with an RS resource indicated by the another QCL-typeD property.

As one embodiment, the meaning that one QCL-typeD property and another QCL-typeD property are the same comprises: an RS resource indicated by the one QCL-typeD property and an RS resource indicated by the another QCL-typeD property are quasi co-located and correspond to the QCL-TypeD.

As one embodiment, if the first resource set has only one QCL-typeD property, the first resource set group comprises resource sets having the same QCL-typeD property as the first resource set in the M resource sets; and if the first resource set has a first QCL-typeD property and a second QCL-typeD property and the first QCL-typeD property is different from the second QCL-typeD property, the first resource set group comprises resource sets having the same QCL-typeD property as the first QCL-typeD property or the second QCL-typeD property in the M resource sets.

### Embodiment 9

Embodiment 9 illustrates a schematic diagram of a first resource set group depending on the QCL-typeD property of a first resource set and the QCL-typeD property of a second resource set according to one embodiment of the present application, as shown in FIG. 9.

As one embodiment, the first resource set group depends on the QCL-typeD property of the first resource set and the QCL-typeD property of the second resource set.

As one embodiment, the first node is configured with a higher-layer parameter twoQCLTypeDforPDCCHRepetition, the first node determines the second resource set from the M resource sets, and the first resource set group depends on the QCL-typeD property of the second resource set.

As one embodiment, only when the first node is configured with a higher-layer parameter twoQCLTypeDforPDCCHRepetition, the first node determines the second resource set from among the M resource sets, and the first resource set group depends on the QCL-typeD property of the second resource set.

As one embodiment, other than the first resource set and the second resource set, whether the first resource set group also comprises other resource sets in the M resource sets depends on the QCL-typeD property of the first resource set and the QCL-typeD property of the second resource set.

As one embodiment, other than the first resource set and the second resource set, which resource sets in the M resource sets are also comprised in the first resource set group depends on the QCL-typeD property of the first resource set and the QCL-typeD property of the second resource set.

As one embodiment, the QCL-typeD property of the first resource set and the QCL-typeD property of the second resource set are used for determining the first resource set group.

As one embodiment, the QCL-typeD property of the first resource set and the QCL-typeD property of the second resource set are used for determining whether the first resource set group comprises other resource sets other than the first resource set and the second resource set.

As one embodiment, the QCL-typeD property of the first resource set and the QCL-typeD property of the second resource set are used for determining which resource sets other than the first resource set and the second resource set are comprised in the first resource set group.

As one embodiment, the first node determines the second resource set from among resource sets that meet the first condition among the M resource sets.

As one embodiment, the first node determines the second resource set from among resource sets that meet the first condition among the M resource sets and are different from the first resource set.

As one embodiment, the first resource set is different from the second resource set.

As one embodiment, a ControlResourceSetId of the first resource set is not equal to a ControlResourceSetId of the second resource set.

As one embodiment, the first resource set and the second resource set are configured on different cells.

As one embodiment, the first resource set and the second resource set are configured on different carriers.

As one embodiment, the first resource set group is composed of the first resource set and the second resource set.

As one embodiment, other than the first resource set and the second resource set group, the first resource set group also comprises at least one other resource set in the M resource sets.

As one embodiment, the search space set refers to: a search space set.

As one embodiment, the search space set comprises at least one of a USS set or a CSS set.

As one embodiment, the search space set comprises a USS set and a CSS set.

As one embodiment, the first-type parameter is a higher-layer parameter.

As one embodiment, the first-type parameter is one field of an RRC IE.

As one embodiment, the first-type parameter is one field of a SearchSpace IE.

As one embodiment, the first-type parameter is a "searchSpaceLinkingId" field of the SearchSpace IE.

As one embodiment, the name of the first-type parameter comprises a "searchSpace" and a "Linking".

As one embodiment, the first-type parameter is a "searchSpaceLinkingId".

As one embodiment, the first-type parameter is a non-negative integer.

As one embodiment, the "searchSpaceLinkingId" of one search space set associated with the first resource set and the "searchSpaceLinkingId" of one search space set associated with the second resource set are set to the same value.

As one embodiment, the determination of the second resource set depends on the index of the cell to which the resource sets that meet the first condition among the M resource sets respectively belong.

As one embodiment, the determination of the second resource set depends on the index and/or type of the search space set associated with each of the M resource sets that meets the first condition.

As one embodiment, the determination of the second resource set depends on whether there is a CSS set that is associated with a resource set that meets the first condition among the M resource sets.

As one embodiment, the first resource set has a third QCL-typeD property; M1 resource sets are obtained by excluding all resource sets having the same QCL-typeD property as the third QCL-typeD property in the M resource sets; and the second resource set is one of the M1 resource sets.

As one embodiment, the M1 is a positive integer less than M.

As one embodiment, the M1 is greater than 1.

As one embodiment, the M1 is equal to 1.

As one embodiment, the first node determines the second resource set from among the M1 resource sets.

As one embodiment, the first node determines the second resource set from resource sets that meet the first condition in the M1 resource sets.

As one embodiment, the determination of the second resource set depends on the index of the cell to which the resource sets that meet the first condition in the M1 resource sets respectively belong.

As one embodiment, the determination of the second resource set depends on the index and/or type of the search space set associated with each of the M1 resource sets that meets the first condition.

As one embodiment, the determination of the second resource set depends on whether there is a CSS set that is associated with a resource set that meets the first condition in the M1 resource sets.

As one embodiment, if after excluding the CSS set and the USS set that are associated with the resource set having the same QCL-typeD property as the third QCL-typeD property, there is still a CSS set associated with one resource set that meets the first condition among the M resource sets, and the second resource set is a resource set with which the second CSS set is associated; and the second CSS set is one CSS set having the lowest CSS set index among the cells comprising CSS sets that have the lowest indexes after excluding the CSS sets and USS sets associated with resource sets having the same QCL-typeD property as the third QCL-typeD property, and the higher layer parameter searchSpaceLinkingId comprised in the second CSS set has the same value as the higher-layer parameter searchSpaceLinkingId comprised in any search space set associated with resource sets having QCL-typeD property identical to the third QCL-typeD property.

As one sub-embodiment of the above embodiment, the lowest CSS set index is determined from among the CSS sets associated with all resource sets that meet the first condition after excluding the CSS sets and USS sets associated with resource sets having the same QCL-typeD property as the third QCL-typeD property.

As one sub-embodiment of the above embodiment, a second CSS set group is composed of CSS sets, among all CSS sets associated with resource sets that meet the first condition in the M1 resource sets, which comprise a higher-layer parameter searchSpaceLinkingld with the same value as a higher-layer parameter searchSpaceLinkingId of any search space set associated with resource sets having the same QCL-typeD property as the third QCL-typeD property; The third cell group is composed of the cells to which each CSS set in the second CSS set group belongs; and the second CSS set is one CSS set having the lowest CSS set index belonging to the third cell in the second CSS set group, and the third cell is one cell having the lowest cell index in the third cell group.

As one embodiment, if after excluding the CSS set and the USS set that are associated with resource sets having the same QCL-typeD property as the third QCL-typeD property, no CSS set is associated with resource sets that meet the first condition among the M resource sets, and the second resource set is a resource set with which the second USS set is associated; the second USS set is one USS set having the lowest USS set index among the cells that have the lowest indexes after excluding the CSS sets and USS sets associated with resource sets having the same QCL-typeD property as the third QCL-typeD property, and the higher-layer parameter searchSpaceLinkingld comprised in the second USS set has the same value as the higher-layer parameter searchSpaceLinkingld comprised in any search space set associated with resource sets having QCL-typeD property identical to the third QCL-typeD property; and the lowest USS set index is determined from among all USS sets that have at least one PDCCH candidate that is within overlapping PDCCH candidate occasions in the time domain and are associated with resource sets that meet the first condition.

As one sub-embodiment of the above embodiment, a second USS set group is composed of USS sets, among all USS sets associated with resource sets that meet the first condition among the M1 resource sets and have at least one PDCCH candidate that is within overlapping PDCCH candidate occasions in the time domain, which comprise a higher-layer parameter searchSpaceLinkingld with the same value as a higher-layer parameter searchSpaceLinkingld of any search space set associated with resource sets having the same QCL-typeD property as the third QCL-typeD property; a fourth cell group is composed of cells to which each USS set in the second USS set group belongs; and the second USS set is one USS set belonging to a fourth cell and having the lowest USS set index in the second USS set group, and the fourth cell is one cell having the lowest cell index in the fourth cell group.

As one embodiment, the first resource set has the third QCL-typeD property, and the second resource set has the fourth QCL-typeD property; and any resource set in the first resource set group has a resource set having the same QCL-typeD property as the third QCL-typeD property or the fourth QCL-typeD property.

As one embodiment, the third QCL-typeD property is different from the fourth QCL-typeD property.

As one embodiment, the first resource set group comprises resource sets having the same QCL-typeD property as the third QCL-typeD property or the fourth QCL-typeD property in the M resource sets.

As one embodiment, the first resource set group is composed of resource sets having the same QCL-typeD property as the third QCL-typeD property or the fourth QCL-typeD property in the M resource sets.

### Embodiment 10

Embodiment 10 illustrates a schematic diagram of a first-type index corresponding to a third resource set according to one embodiment of the present application, the first-type index comprising an identifier of an RS resource indicated by a QCL-typeD property of the third resource set, as shown in FIG. 10.

As one embodiment, an RS resource indicated by the QCL-typeD property of one resource set refers to: an RS resource that is quasi co-located with a PDCCH candidate in the one resource set and corresponds to the QCL-TypeD.

As one embodiment, an RS resource indicated by the QCL-typeD property of one resource set refers to: an RS resource that is quasi co-located with a DMRS port for PDCCH reception in the one resource set and corresponds to the QCL-TypeD.

As one embodiment, an RS resource indicated by the QCL-typeD property of one resource set refers to: an RS resource corresponding to QCL-TypeD that is indicated by a TCI state of the one resource set.

As one embodiment, one of the first-type indexes is used for identifying one RS resource.

As one embodiment, the first-type index comprises one or more of a NZP-CSI-RS-Resourceld, an SSB-Index, or an SRS-Resourceld.

As one embodiment, the first-type index is used for identifying a group of RS resources.

As one embodiment, the first-type index comprises at least one of a NZP-CSI-RS-ResourceSetld or an SRS-ResourceSetld.

As one embodiment, the third resource set is any one of the M resource sets.

As one embodiment, the first-type index corresponding to the third resource set is an identifier of an RS resource indicated by the QCL-typeD property of the third resource set.

As one embodiment, the first-type index corresponding to the third resource set comprises an identifier of an RS resource indicated by each activated TCI state of the third resource set.

As one embodiment, the first-type index corresponding to the third resource set is an identifier of an RS resource corresponding to the QCL-TypeD that is indicated by a TCI state of the third resource set.

As one embodiment, the first-type index corresponding to the third resource set comprises an identifier of an RS resource corresponding to the QCL-TypeD that is indicated by each activated TCI state of the third resource set.

As one embodiment, the first-type index corresponding to the third resource set is an identifier of an RS resource that is quasi co-located with a PDCCH candidate in the third resource set.

As one embodiment, the first-type index corresponding to the third resource set is an identifier of an RS resource that is quasi co-located with a PDCCH candidate in the third resource set and corresponds to the QCL-TypeD.

As one embodiment, the first-type index corresponding to the third resource set comprises an identifier of each RS resource that is quasi co-located with a PDCCH candidate in the third resource set and corresponds to the QCL-TypeD.

As one embodiment, the first-type index corresponding to the third resource set is an identifier of an RS resource that is quasi co-located with a DMRS port for PDCCH reception in the third resource set.

As one embodiment, the first-type index corresponding to the third resource set is an identifier of an RS resource that is quasi co-located with a DMRS port for PDCCH reception in the third resource set and corresponds to the QCL-TypeD.

As one embodiment, the first-type index corresponding to the third resource set comprises an identifier of each RS resource that is quasi co-located with a DMRS port for PDCCH reception in the third resource set and corresponds to the QCL-TypeD.

As one embodiment, the first-type index corresponding to each of the M resource sets indicates one RS resource.

As one embodiment, the first-type index corresponding to each of the M resource sets indicates a group of RS resources.

As one embodiment, there is one given resource set in the M resource sets that the corresponding first-type index comprises an identifier of an RS resource that is quasi co-located with a PDCCH candidate in the given resource set.

As one embodiment, there is one given resource set in the M resource sets that the corresponding first-type index comprises an identifier of an RS resource of QCL-TypeD that is quasi co-located with and corresponds to a PDCCH candidate in the given resource set.

As one embodiment, there is one given resource set in the M resource sets that the corresponding first-type index comprises an identifier of each RS resource of QCL-TypeD that is quasi co-located with and corresponds to a PDCCH candidate in the given resource set.

As one embodiment, there is one given resource set in the M resource sets that the corresponding first-type index comprises an identifier of an RS resource indicated by a TCI state of the given resource set.

As one embodiment, there is one given resource set in the M resource sets that the corresponding first-type index comprises an identifier of an RS resource corresponding to QCL-TypeD that is indicated by a TCI state of the given resource set.

As one embodiment, there is one given resource set in the M resource sets that the corresponding first-type index comprises an identifier of an RS resource corresponding to QCL-TypeD that is indicated by each activated TCI state of the given resource set.

As one embodiment, there is one given resource set in the M resource sets that the corresponding first-type index indicates one RS resource or a group of RS resources.

As one embodiment, there is one given resource set in the M resource sets that the corresponding first-type index is one of a NZP-CSI-RS-ResourceId, an SSB-Index, or an SRS-ResourceId.

As one embodiment, there is one given resource set in the M resource sets that the corresponding first-type index is a NZP-CSI-RS-ResourceId or an SSB-Index.

As one embodiment, the first-type index corresponding to each of the M resource sets is a NZP-CSI-RS-ResourceId, an SSB-Index, or an SRS-Resourceld.

As one embodiment, the first-type index corresponding to each of the M resource sets is a NZP-CSI-RS-ResourceId or an SSB-Index.

As one embodiment, the first-type index corresponding to each of the M resource sets is an identifier of an RS resource indicated by a TCI state of the resource set.

As one embodiment, the first-type index corresponding to each of the M resource sets comprises an identifier of an RS resource indicated by each TCI state of the resource set.

As one embodiment, the first-type index corresponding to each of the M resource sets is an identifier of an RS resource that is indicated by a TCI state of the resource set and corresponds to the QCL-TypeD.

As one embodiment, the first-type index corresponding to each of the M resource sets comprises an identifier of an RS resource that is indicated by each TCI state of the resource set and corresponds to the QCL-TypeD.

As one embodiment, the first-type index corresponding to each of the M resource sets is an identifier of an RS resource that is quasi co-located with a PDCCH candidate in the resource set.

As one embodiment, the first-type index corresponding to each of the M resource sets is an identifier of an RS resource that is quasi co-located with a PDCCH candidate in the resource set and corresponds to the QCL-TypeD.

As one embodiment, the first-type index corresponding to each of the M resource sets comprises an identifier of each RS resource that is quasi co-located with a PDCCH candidate in the resource set and corresponds to the QCL-TypeD.

As one embodiment, the first-type index corresponding to each of the M resource sets is an identifier of an RS resource that is quasi co-located with a DMRS port for PDCCH reception in the resource set.

As one embodiment, the first-type index corresponding to each of the M resource sets is an identifier of an RS resource that is quasi co-located with a DMRS port for PDCCH reception in the resource set and corresponds to the QCL-TypeD.

As one embodiment, the first-type index corresponding to each of the M resource sets comprises an identifier of each RS resource that is quasi co-located with a DMRS port for PDCCH reception in the resource set and corresponds to the QCL-TypeD.

As one embodiment, the third resource set has two activated TCI states, and the first-type index corresponding to the third resource set comprises an identifier of an RS resource that is indicated by each TCI state of the two activated TCI states and corresponds to the QCL-TypeD.

As one embodiment, the third resource set has two QCL-typeD properties, and the first-type index corresponding to the third resource set comprises an identifier of an RS resource that is indicated by each QCL-typeD property of the two QCL-typeD properties.

### Embodiment 11

Embodiment 11 illustrates a schematic diagram of a first-type index corresponding to a fourth resource set according to one embodiment of the present application, the first-type index comprising an identifier of a TCI state of the fourth resource set, as shown in FIG. 11.

As one embodiment, one of the first-type indexes is used for identifying one TCI state.

As one embodiment, the first-type index comprises at least one of a TCI-StateId or a TCI-UL-State-Id.

As one embodiment, the fourth resource set is any one of the M resource sets.

As one embodiment, the first-type index corresponding to the fourth resource set is an identifier of a TCI state of the fourth resource set.

As one embodiment, the first-type index corresponding to the fourth resource set comprises an identifier of each TCI state of the fourth resource set.

As one embodiment, the first-type index corresponding to the fourth resource set comprises an identifier of each activated TCI state of the fourth resource set.

As one embodiment, there is one given resource set in the M resource sets that the corresponding first-type index comprises an identifier of a TCI state of the given resource set.

As one embodiment, there is one given resource set in the M resource sets that the corresponding first-type index comprises an identifier of each activated TCI state of the given resource set.

As one embodiment, there is one given resource set in the M resource sets that the corresponding first-type index indicates one TCI state.

As one embodiment, there is one resource set in the M resource sets that the corresponding first-type index is one TCI-StateId or one TCI-UL-State-Id.

As one embodiment, the first-type index corresponding to each of the M resource sets indicates one TCI state.

As one embodiment, the first-type index corresponding to each of the M resource sets is one TCI-StateId or one TCI-UL-State-Id.

As one embodiment, the first-type index corresponding to each of the M resource sets is an identifier of a TCI state of the resource set.

As one embodiment, the first-type index corresponding to each of the M resource sets comprises an identifier of each TCI state of the resource set.

As one embodiment, the first-type index corresponding to each of the M resource sets comprises an identifier of each activated TCI state of the resource set.

As one embodiment, the fourth resource set has two activated TCI states, and the first-type index corresponding to the fourth resource set comprises a TCI-StateId or a TCI-UL-State-Id of each TCI state of the two activated TCI states.

As one embodiment, an identifier of one of the TCI states is a TCI-StateId or a TCI-UL-State-Id.

### Embodiment 12

Embodiment 12 illustrates a schematic diagram of a first-type index corresponding to a fifth resource set according to one embodiment of the present application, the first-type index comprising a CORESET pool index of the fifth resource set, as shown in FIG. 12.

As one embodiment, one of the first-type indexes is used for identifying one CORESET pool.

As one embodiment, one of the first-type indexes is used for identifying one CORESET.

As one embodiment, the first-type index comprises a coresetPoolIndex.

As one embodiment, the first-type index comprises a ControlResourceSetId.

As one embodiment, the fifth resource set is any one of the M resource sets.

As one embodiment, the first-type index corresponding to the fifth resource set is a CORESET pool index of the fifth resource set.

As one embodiment, there is one given resource set in the M resource sets that the corresponding first-type index indicates one CORESET pool.

As one embodiment, there is one resource set in the M resource sets that the corresponding first-type index is one coresetPoolIndex.

As one embodiment, there is one given resource set in the M resource sets that the corresponding first-type index indicates one CORESET.

As one embodiment, there is one resource set in the M resource sets that the corresponding first-type index is one ControlResourceSetld.

As one embodiment, the first-type index corresponding to each of the M resource sets indicates one CORESET pool.

As one embodiment, the first-type index corresponding to each of the M resource sets is one coresetPoolIndex.

As one embodiment, the first-type index corresponding to each of the M resource sets indicates one CORESET.

As one embodiment, there is one given resource set in the M resource sets that the corresponding first-type index comprises a ControlResourceSetld of the given resource set.

As one embodiment, there is one given resource set in the M resource sets that the corresponding first-type index comprises a coresetPoolIndex of a CORESET pool to which the given resource set belongs.

As one embodiment, the first-type index corresponding to each of the M resource sets is one ControlResourceSetId.

As one embodiment, the first-type index corresponding to each of the M resource sets is a coresetPoolIndex.

As one embodiment, the first-type index corresponding to each of the M resource sets is a coresetPoolIndex of a CORESET pool to which the resource set belongs.

As one embodiment, the first-type index corresponding to each of the M resource sets is a ControlResourceSetId of the resource set.

As one embodiment, when one resource set is configured with a coresetPoollndex set to 0 or is not configured with a coresetPoollndex, a coresetPoollndex of a CORESET pool to which the one resource set belongs is equal to 0; and when one resource set is configured with a coresetPoollndex set to 1, a coresetPoolIndex of a CORESET pool to which the one resource set belongs is equal to 1.

### Embodiment 13

Embodiment 13 illustrates a schematic diagram of a first node determining a first resource set from among resource sets that meet a first condition in M resource sets only when a first time window is not earlier than a target time slot in a time domain according to one embodiment of the present application, as shown in FIG. 13. In Embodiment 13, the first information block is used by the first node for determining the target time slot.

As one embodiment, time domain resources occupied by the first information block are used for determining the target time slot.

As one embodiment, the first node transmits HARQ-ACK (Hybrid Automatic Repeat request-Acknowledgement) for the first information block in a first channel, the time domain resources occupied by the first information block are used for determining time domain resources of the first channel, and the time domain resources of the first channel are used for determining the target time slot.

As one embodiment, the HARQ-ACK comprises ACK.

As one embodiment, the HARQ-ACK comprises NACK (Negative ACKnowledgement).

As one embodiment, the first channel is transmitted in time slot k, and the target time slot is a first time slot after time slot (k + first offset); and the first offset is a non-negative integer.

As one embodiment, the first offset is a positive integer not less than 3.

As one embodiment, the first offset is related to a subcarrier spacing of the first channel.

As one embodiment, the first information block is used for determining time slot n, the first channel is transmitted in time slot (n + second offset), and the second offset is a non-negative integer.

As one embodiment, k is equal to n + the second offset.

As one embodiment, the first information block is transmitted in the time slot n.

As one embodiment, a PDSCH or PDCCH carrying the first information block is transmitted in the time slot n.

As one embodiment, the time slot n is a time slot to which the last symbol of the PDSCH carrying the first information block belongs.

As one embodiment, the time slot n is the last uplink time slot that overlaps with the reception of the PDSCH or PDCCH carrying the first information block.

As one embodiment, the time slot n is the last uplink time slot that overlaps with a downlink time slot occupied by the reception of the PDSCH or PDCCH carrying the first information block.

As one embodiment, the first information block indicates the second offset.

As one embodiment, the first information block is carried by one DCI, the one DCI indicating the second offset.

As one embodiment, the second offset is configured by a higher-layer signaling.

As one embodiment, the second offset is fixed.

As one embodiment, the second offset is related to the subcarrier spacing of the first information block.

As one embodiment, the second offset is related to the subcarrier spacing of the first channel.

As one embodiment, the first information block is transmitted on a first PDSCH, a first signaling comprises scheduling information of the first PDSCH, and the first signaling indicates the second offset.

As one embodiment, the first signaling comprises DCI.

As one embodiment, the first signaling comprises information in all or part of fields in one IE.

As one embodiment, the scheduling information comprises one or more of time domain resources, frequency domain resources, MCSs, DMRS ports, HARQ process numbers, RVs (Redundancy Versions), NDIs (New Data Indicators), TCI states, or SRIs(Sounding Reference Signal Resource Indicators).

As one embodiment, the first signaling is used for scheduling the first PDSCH.

As one embodiment, the target time slot is a first time slot after the third offset number of symbols after the last symbol occupied by the first channel; and the third offset is a non-negative integer.

As one embodiment, the third offset is configured by a higher-layer signaling.

As one embodiment, the third offset is configured by a higher-layer parameter beamAppTime.

As one embodiment, the first channel is a physical channel.

As one embodiment, the first channel is a PUCCH (Physical Uplink Control Channel).

As one embodiment, the first channel is a PUSCH (Physical Uplink Shared Channel).

As one embodiment, the first information block is transmitted in time slot n, the target time slot is time slot (n + fourth offset), and the fourth offset is a non-negative integer.

As one embodiment, the fourth offset is configured by a higher-layer signaling.

As one embodiment, the fourth offset is fixed.

As one embodiment, the fourth offset is related to the subcarrier spacing of the first information block.

As one embodiment, the meaning of the sentence that the first time window is not earlier than the target time slot in the time domain comprises: the starting time of the first time window is not earlier than the starting time of the target time slot.

As one embodiment, the meaning of the sentence that the first time window is not earlier than the target time slot in the time domain comprises: the earliest symbol of the first time window is not earlier than the earliest symbol of the target time slot.

As one embodiment, the meaning of the sentence that the first time window is not earlier than the target time slot in the time domain comprises: the earliest symbol of the first time window is later than the latest symbol of the target time slot.

As one embodiment, the first time window is not earlier than the target time slot in the time domain.

As one embodiment, the first time window is later than the target time slot in the time domain.

As one embodiment, the starting time of the first time window is not earlier than the starting time of the target time slot.

As one embodiment, the starting time of the first time window is later than the starting time of the target time slot.

As one embodiment, the earliest symbol of the first time window is not earlier than the earliest symbol of the target time slot.

As one embodiment, the earliest symbol of the first time window is later than the earliest symbol of the target time slot.

As one embodiment, the earliest symbol of the first time window is later than the latest symbol of the target time slot.

As one embodiment, if and only if the first time window is not earlier than the target time slot in the time domain, the first node determines the first resource set from among resource sets that meet the first condition among the M resource sets.

As one embodiment, when the first time window is earlier than the target time slot in the time domain, the first node determines the first resource set from among all resource sets in the M resource sets.

### Embodiment 14

Embodiment 14 illustrates a structural block diagram of a processing unit used in a first node according to one embodiment of the present application, as shown in FIG. 14. In FIG. 14, the processing unit 1400 used in the first node comprises a first processor 1401.

In Embodiment 14, the first processor 1401 receives a first information block, determines a first resource set and a first resource set group from among M resource sets, and monitors a first-type channel in a first time window and within only the first resource set group among the M resource sets.

In Embodiment 14, the first information block is used for determining a first index set; M is a positive integer greater than 1, and the first resource set group comprises at least one of the M resource sets; any two of the M resource sets overlap in a time domain in the first time window, and the first resource set group comprises the first resource set; the first resource set group depends on the QCL-typeD property of the first resource set; the first node determines the first resource set from among resource sets that meet a first condition among the M resource sets; and the first condition is related to the first index set.

As one embodiment, each of the M resource sets corresponds to at least one first-type index; and the first condition comprises that the corresponding first-type index does not belong to the first index set.

As one embodiment, each of the M resource sets corresponds to at least one first-type index; and the first condition comprises that the corresponding first-type index belongs to the first index set.

As one embodiment, the first resource set group is related to the number of QCL-typeD properties of the first resource set.

As one embodiment, the first processor 1401 determines a second resource set from among the M resource sets, and the first resource set group comprises the second resource set, wherein one search space set associated with the first resource set and one search space set associated with the second resource set comprise a first-type parameter set to the same value; and the first resource set group depends on the QCL-typeD property of the second resource set.

As one embodiment, a third resource set is one of the M resource sets, and the first-type index corresponding to the third resource set comprises an identifier of an RS resource indicated by the QCL-typeD property of the third resource set.

As one embodiment, a fourth resource set is one of the M resource sets, and the first-type index corresponding to the fourth resource set comprises an identifier of a TCI state of the fourth resource set.

As one embodiment, a fifth resource set is one of the M resource sets, and the first-type index corresponding to the fifth resource set comprises a CORESET pool index of the fifth resource set.

As one embodiment, the first information block is used for determining a target time slot; and the first node determines the first resource set from among resource sets that meet the first condition among the M resource sets only when the first time window is not earlier than the target time slot in the time domain.

As one embodiment, the M resource sets are respectively M CORESETs; the first-type channel is a PDCCH; the first index set is used for indicating one or more of an activated RS resource, an activated TCI state, an activated antenna port, an activated CORESET, an activated CORESET pool, an activated TRP; or an activated antenna panel, or the first index set is used for indicating one or more of a deactivated RS resource, a deactivated TCI state, a deactivated antenna port, a deactivated CORESET, a deactivated CORESET pool, a deactivated TRP, or a deactivated antenna panel.

As one embodiment, the first node is user equipment.

As one embodiment, the first node is a relay node device.

As one embodiment, the first processor 1401 comprises at least one of {an antenna 452, a receiving device 454, a receiving processor 456, a multi-antenna receiving processor 458, a controller/processor 459, a memory 460, and a data source 467} in Embodiment 4.

### Embodiment 15

Embodiment 15 illustrates a structural block diagram of a processing unit used in a second node according to one embodiment of the present application, as shown in FIG. 15. In FIG.15, the processing unit 1500 used in the second node comprises a second processor 1501.

In Embodiment 15, the second processor 1501 transmits a first information block, and transmits or abandons the transmission of a first-type channel in a first time window and within a first resource set group.

In Embodiment 15, the first information block is used for determining a first index set; the first resource set group comprises at least one of the M resource sets, M is a positive integer greater than 1, any two of the M resource sets overlap in a time domain in the first time window, and a target recipient of the first information block determines a first resource set and the first resource set group from among the M resource sets, and monitors the first-type channel within only the first resource set group among the M resource sets; the first resource set group comprises the first resource set; the first resource set group depends on the QCL-typeD property of the first resource set; the target recipient of the first information block determines the first resource set from among resource sets that meet a first condition among the M resource sets; and the first condition is related to the first index set.

As one embodiment, each of the M resource sets corresponds to at least one first-type index; and the first condition comprises that the corresponding first-type index does not belong to the first index set.

As one embodiment, each of the M resource sets corresponds to at least one first-type index; and the first condition comprises that the corresponding first-type index belongs to the first index set.

As one embodiment, the first resource set group is related to the number of QCL-typeD properties of the first resource set.

As one embodiment, the first resource set group depends on the QCL-typeD property of a second resource set; one search space set associated with the first resource set and one search space set associated with the second resource set comprise a first-type parameter set to the same value; and the target recipient of the first information block determines the second resource set from among the M resource sets, and the first resource set group comprises the second resource set.

As one embodiment, a third resource set is one of the M resource sets, and the first-type index corresponding to the third resource set comprises an identifier of an RS resource indicated by the QCL-typeD property of the third resource set.

As one embodiment, a fourth resource set is one of the M resource sets, and the first-type index corresponding to the fourth resource set comprises an identifier of a TCI state of the fourth resource set.

As one embodiment, a fifth resource set is one of the M resource sets, and the first-type index corresponding to the fifth resource set comprises a CORESET pool index of the fifth resource set.

As one embodiment, the first information block is used for determining a target time slot; and the target recipient of the first information block determines the first resource set from among resource sets that meet the first condition among the M resource sets only when the first time window is not earlier than the target time slot in the time domain.

As one embodiment, the second processor 1501 determines the first resource set from among the M resource sets.

As one embodiment, the second processor 1501 determines the second resource set from among the M resource sets.

As one embodiment, the second processor 1501 determines the first resource set group from among the M resource sets.

As one embodiment, the M resource sets are respectively M CORESETs; the first-type channel is a PDCCH; the first index set is used for indicating one or more of an activated RS resource, an activated TCI state, an activated antenna port, an activated CORESET, an activated CORESET pool, an activated TRP, or an activated antenna panel; or the first index set is used for indicating one or more of a deactivated RS resource, a deactivated TCI state, a deactivated antenna port, a deactivated CORESET, a deactivated CORESET pool, a deactivated TRP, or a deactivated antenna panel.

As one embodiment, the second node is a base station device.

As one embodiment, the second node is user equipment.

As one embodiment, the second node is a relay node device.

As one embodiment, the second processor 1501 comprises at least one of {an antenna 420, a transmitting device 418, a transmitting processor 416, a multi-antenna transmitting processor 471, a controller/processor 475, and a memory 476} in Embodiment 4.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The user equipment, terminals and UE in the present application include, but are not limited to, drones, communication modules on drones, remote-controlled aircrafts, aircrafts, small aircrafts, mobile phones, tablet computers, notebooks, vehicle-mounted communication devices, transportation means, vehicles, RSUs, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices. The base stations or system devices in the present application include, but are not limited to, macrocell base stations, microcell base stations, small cell base stations, femtocells, relay base stations, eNBs, gNBs, TRPs (Transmitter Receiver Points), GNSSs, relay satellites, satellite base stations, aerial base stations, RSUs (Road Side Units), drones, test devices, and wireless communication devices such as transceiving apparatuses or signaling testers that simulate some functions of base stations.

Those skilled in the art should understand that the present invention may be implemented in other specified forms without departing from its core or basic features. Therefore, the embodiments disclosed at present should be regarded as descriptive rather than restrictive in any case. The scope of the invention is determined by the appended claims rather than the previous description, and all changes within their equivalent meanings and areas are deemed to be comprised therein.

## Claims

1. A first node device for wireless communications, comprising:
a first processor, receiving a first information block, the first information block being used for determining a first index set;
the first processor determining a first resource set and a first resource set group from among M resource sets, M being a positive integer greater than 1, and the first resource set group comprising at least one of the M resource sets; and
the first processor monitoring a first-type channel in a first time window and within only the first resource set group among the M resource sets;
wherein any two of the M resource sets overlap in a time domain in the first time window, and the first resource set group comprises the first resource set; the first resource set group depends on the QCL-typeD property of the first resource set; the first node determines the first resource set from among resource sets that meet a first condition among the M resource sets; and the first condition is related to the first index set.

2. The first node device according to claim 1, wherein the first resource set group is related to the number of QCL-typeD properties of the first resource set.

3. The first node device according to claim 1 or 2, wherein the first processor determines a second resource set from among the M resource sets, and the first resource set group comprises the second resource set, wherein one search space set associated with the first resource set and one search space set associated with the second resource set comprise a first-type parameter set to the same value; and the first resource set group depends on the QCL-typeD property of the second resource set.

4. The first node device according to any one of claims 1 to 3, wherein each of the M resource sets corresponds to at least one first-type index; and the first condition comprises that the corresponding first-type index does not belong to the first index set, or the first condition comprises that the corresponding first-type index belongs to the first index set.

5. The first node device according to claim 4, wherein a third resource set is one of the M resource sets, and the first-type index corresponding to the third resource set comprises an identifier of an RS resource indicated by the QCL-typeD property of the third resource set.

6. The first node device according to claim 4 or 5, wherein a fourth resource set is one of the M resource sets, and the first-type index corresponding to the fourth resource set comprises an identifier of a TCI state of the fourth resource set.

7. The first node device according to any one of claims 4 to 6, wherein a fifth resource set is one of the M resource sets, and the first-type index corresponding to the fifth resource set comprises a CORESET pool index of the fifth resource set.

8. The first node device according to any one of claims 1 to 7, wherein the first information block is used for determining a target time slot; and the first node determines the first resource set from among resource sets that meet the first condition among the M resource sets only when the first time window is not earlier than the target time slot in the time domain.

9. A second node device for wireless communications, comprising:
a second processor, transmitting a first information block, the first information block being used for determining a first index set; and
the second processor transmitting or abandoning the transmission of a first-type channel in a first time window and within a first resource set group;
wherein the first resource set group comprises at least one of M resource sets, M is a positive integer greater than 1, any two of the M resource sets overlap in a time domain in the first time window, and a target recipient of the first information block determines a first resource set and the first resource set group from among the M resource sets, and monitors the first-type channel within only the first resource set group among the M resource sets; the first resource set group comprises the first resource set; the first resource set group depends on the QCL-typeD property of the first resource set; the target recipient of the first information block determines the first resource set from among resource sets that meet a first condition among the M resource sets; and the first condition is related to the first index set.

10. The second node device according to claim 9, wherein the first resource set group is related to the number of QCL-typeD properties of the first resource set.

11. The second node device according to claim 9 or 10, wherein the first resource set group depends on the QCL-typeD property of a second resource set; one search space set associated with the first resource set and one search space set associated with the second resource set comprise a first-type parameter set to the same value; and the target recipient of the first information block determines the second resource set from among the M resource sets, and the first resource set group comprises the second resource set.

12. The second node device according to any one of claims 9 to 11, wherein each of the M resource sets corresponds to at least one first-type index; and the first condition comprises that the corresponding first-type index does not belong to the first index set, or the first condition comprises that the corresponding first-type index belongs to the first index set.

13. The second node device according to claim 12, wherein a third resource set is one of the M resource sets, and the first-type index corresponding to the third resource set comprises an identifier of an RS resource indicated by the QCL-typeD property of the third resource set.

14. The second node device according to claim 12 or 13, wherein a fourth resource set is one of the M resource sets, and the first-type index corresponding to the fourth resource set comprises an identifier of a TCI state of the fourth resource set.

15. The second node device according to any one of claims 12 to 14, wherein a fifth resource set is one of the M resource sets, and the first-type index corresponding to the fifth resource set comprises a CORESET pool index of the fifth resource set.

16. The second node device according to any one of claims 9 to 15, wherein the first information block is used for determining a target time slot; and the target recipient of the first information block determines the first resource set from among resource sets that meet the first condition among the M resource sets only when the first time window is not earlier than the target time slot in the time domain.

17. A method used in a first node for wireless communications, comprising:
receiving a first information block, the first information block being used for determining a first index set;
determining a first resource set and a first resource set group from among M resource sets, M being a positive integer greater than 1, and the first resource set group comprising at least one of the M resource sets; and
monitoring a first-type channel in a first time window and within only the first resource set group among the M resource sets;
wherein any two of the M resource sets overlap in a time domain in the first time window, and the first resource set group comprises the first resource set; the first resource set group depends on the QCL-typeD property of the first resource set; the first node determines the first resource set from among resource sets that meet a first condition among the M resource sets; and the first condition is related to the first index set.

18. The method according to claim 17, wherein the first resource set group is related to the number of QCL-typeD properties of the first resource set.

19. The method according to claim 17 or 18, comprising:
determining a second resource set from among the M resource sets, the first resource set group comprising the second resource set;
wherein one search space set associated with the first resource set and one search space set associated with the second resource set comprise a first-type parameter set to the same value; and the first resource set group depends on the QCL-typeD property of the second resource set.

20. The method according to any one of claims 17 to 19, wherein each of the M resource sets corresponds to at least one first-type index; and the first condition comprises that the corresponding first-type index does not belong to the first index set, or the first condition comprises that the corresponding first-type index belongs to the first index set.

21. The method according to claim 20, wherein a third resource set is one of the M resource sets, and the first-type index corresponding to the third resource set comprises an identifier of an RS resource indicated by the QCL-typeD property of the third resource set.

22. The method according to claim 20 or 21, wherein a fourth resource set is one of the M resource sets, and the first-type index corresponding to the fourth resource set comprises an identifier of a TCI state of the fourth resource set.

23. The method according to any one of claims 20 to 22, wherein a fifth resource set is one of the M resource sets, and the first-type index corresponding to the fifth resource set comprises a CORESET pool index of the fifth resource set.

24. The method according to any one of claims 17 to 23, wherein the first information block is used for determining a target time slot; and the first node determines the first resource set from among resource sets that meet the first condition among the M resource sets only when the first time window is not earlier than the target time slot in the time domain.

25. A method used in a second node for wireless communications, comprising:
transmitting a first information block, the first information block being used for determining a first index set; and
transmitting or abandoning the transmission of a first-type channel in a first time window and within a first resource set group;
wherein the first resource set group comprises at least one of M resource sets, M is a positive integer greater than 1, any two of the M resource sets overlap in a time domain in the first time window, and a target recipient of the first information block determines a first resource set and the first resource set group from among the M resource sets, and monitors the first-type channel within only the first resource set group among the M resource sets; the first resource set group comprises the first resource set; the first resource set group depends on the QCL-typeD property of the first resource set; the target recipient of the first information block determines the first resource set from among resource sets that meet a first condition among the M resource sets; and the first condition is related to the first index set.

26. The method according to claim 25, wherein the first resource set group is related to the number of QCL-typeD properties of the first resource set.

27. The method according to claim 25 or 26, wherein the first resource set group depends on the QCL-typeD property of the second resource set; one search space set associated with the first resource set and one search space set associated with the second resource set comprise a first-type parameter set to the same value; and the target recipient of the first information block determines the second resource set from among the M resource sets, and the first resource set group comprises the second resource set.

28. The method according to any one of claims 25 to 27, wherein each of the M resource sets corresponds to at least one first-type index; and the first condition comprises that the corresponding first-type index does not belong to the first index set, or the first condition comprises that the corresponding first-type index belongs to the first index set.

29. The method according to claim 28, wherein a third resource set is one of the M resource sets, and the first-type index corresponding to the third resource set comprises an identifier of an RS resource indicated by the QCL-typeD property of the third resource set.

30. The method according to claim 28 or 29, wherein a fourth resource set is one of the M resource sets, and the first-type index corresponding to the fourth resource set comprises an identifier of a TCI state of the fourth resource set.

31. The method according to any one of claims 28 to 30, wherein a fifth resource set is one of the M resource sets, and the first-type index corresponding to the fifth resource set comprises a CORESET pool index of the fifth resource set.

32. The method according to any one of claims 25 to 31, wherein the first information block is used for determining a target time slot; and the target recipient of the first information block determines the first resource set from among resource sets that meet the first condition among the M resource sets only when the first time window is not earlier than the target time slot in the time domain.
